# EUROPEAN PATENT APPLICATION

(11) **EP 4 199 488 A1**
(43) Date of publication of application: **21.06.2023**
(21) Application number: 21860113.6
(22) Date of filing: 09.08.2021
(51) Int. Cl.: H04M 1/725, H04W 52/02, G10L 17/22

(54) **VOICE INTERACTION METHOD AND ELECTRONIC DEVICE**

(30) Priority: 31.08.2020 CN 202010901726
(71) Applicant: Huawei Technologies Co., Ltd., Shenzhen, Guangdong 518129 (CN)
(72) Inventor: LI, Yongde, Shenzhen, Guangdong 518129 (CN); LIU, Zhen, Shenzhen, Guangdong 518129 (CN); ZHANG, Shuqing, Shenzhen, Guangdong 518129 (CN)
(74) Representative: Maiwald GmbH
(86) International application number: PCT/CN2021/111407
(87) International publication number: WO 2022/042274

(57) **Abstract**

This application provides a voice interaction method and an electronic device, and relates to the artificial intelligence field. In the method, in response to a user operation used to start a voice assistant, an electronic device whose screen is in a screen-off state may start a detection apparatus to detect whether a user needs to watch the screen, so as to intelligently determine whether to turn on the screen. If the electronic device determines that the user does not need to watch the screen, the electronic device may keep the screen in the screen-off state, and interact with the user in a voice manner. In this way, the electronic device can reduce power consumption and avoid accidental touch.

## Description

This application claims priority to Chinese Patent Application No. 202010901726.8, filed with the China National Intellectual Property Administration on August 31, 2020 and entitled "VOICE INTERACTION METHOD AND ELECTRONIC DEVICE", which is incorporated herein by reference in its entirety.

### TECHNICAL FIELD

This application relates to the artificial intelligence field, and in particular, to a voice interaction method and an electronic device.

### BACKGROUND

With development of electronic devices, more electronic devices are configured with an application that can perform voice interaction with a user, for example, a voice assistant. The user may perform voice interaction with the electronic device by using the voice assistant, to implement a function that previously needs to be implemented by performing a plurality of manual operations, for example, making a call or playing music.

Currently, when the user performs voice interaction with an electronic device having a screen by using a voice assistant, the electronic device directly turns on the screen, and displays a user interface of the voice assistant and related content obtained by executing a received voice instruction.

### SUMMARY

This application provides a voice interaction method and an electronic device. In this method, when starting a voice assistant, an electronic device in a screen-off state may detect whether a user needs to watch a screen, to intelligently determine whether to turn on the screen. When determining that the user does not need to watch the screen, the electronic device may keep the screen in the screen-off state, and interact with the user in a voice manner. In this way, the electronic device can reduce power consumption and avoid accidental touch.

According to a first aspect, an embodiment of this application provides a voice interaction method. The method includes: An electronic device may detect a first operation of a user when a screen is in a screen-off state, where the first operation may be used to start a voice assistant. In a first case, the electronic device may start the voice assistant when the screen is kept in the screen-off state, and enable the voice assistant to interact with the user in a first manner, where the first manner is to interact with the user only through a voice. The first case may include any one of the following:

A first sensor detects that no blockage exists within a preset distance from the screen, and a second sensor does not detect a face;
the second sensor does not detect a face; or
the first sensor detects that a blockage exists within the preset distance from the screen.

With reference to the first aspect, in a second case, the electronic device may turn on the screen, start the voice assistant, and enable the voice assistant to interact with the user in a second manner, where the second manner includes interacting with the user through a graphical interface. The second case includes any one of the following:

The first sensor detects that no blockage exists within the preset distance from the screen, and the second sensor detects a face;
the first sensor detects that no blockage exists within the preset distance from the screen, and a third sensor detects that a posture of the electronic device is switched from a first posture to a second posture;
the second sensor detects a face; or
the third sensor detects that the posture of the electronic device is switched from the first posture to the second posture.

With reference to the first aspect, the first sensor may include one or more of the following: an optical proximity sensor, an infrared sensor, and a radar sensor. The second sensor may include a camera. The third sensor may include a motion sensor. The motion sensor includes one or more of the following: an acceleration sensor and a gyroscope sensor.

The first case may be a case in which the user does not watch the screen of the electronic device. For example, when the user places the screen of the electronic device downward on a table, the first sensor of the electronic device may detect that a blockage exists within the preset distance from the screen. Therefore, the electronic device may determine that the user does not watch the screen of the electronic device. When the user places the screen of the electronic device upward on the table, but does not make the face face opposite to the screen of the electronic device, the first sensor of the electronic device may detect that no object exists within the preset distance from the screen, and the second sensor does not detect the face. Therefore, the electronic device may determine that the user does not watch the screen of the electronic device.

The second case may be a case in which the user watches the screen of the electronic device. For example, when the user places the screen of the electronic device upward on the table, and makes the face face opposite to the screen of the electronic device, the first sensor of the electronic device may detect that no blockage exists within the preset distance from the screen, and the second sensor detects the face. Therefore, the electronic device may determine that the user watches the screen of the electronic device. When the user performs a hand raising action, for example, changes the electronic device with the screen facing upward from a horizontally placed posture to a tilted or vertically placed posture, the screen of the electronic device after posture adjustment may be opposite to the face, and the electronic device may detect, by using the third sensor, that the posture of the electronic device is switched from the first posture to the second posture. Therefore, the electronic device may determine that the user watches the screen of the electronic device. The first posture may be, for example, a posture in which the screen of the electronic device is horizontally placed upward. The second posture may be, for example, a posture in which the screen is placed upward and tilted.

It can be learned from the foregoing method that when detecting that the user does not need to watch the screen, the electronic device may keep the screen in the screen-off state, and perform voice interaction with the user, thereby reducing power consumption of the electronic device and avoiding an accidental touch.

In some embodiments, when starting the voice assistant, the electronic device in the screen-off state may first detect, by using the first sensor (for example, an optical proximity sensor), whether a blockage exists within the preset distance from the screen. If it is detected that the blockage exists within the preset distance from the screen, the electronic device may directly determine that the user does not watch the screen. In this way, the electronic device may not enable the second sensor (such as a camera) to detect a face, thereby reducing power consumption of the electronic device. When the screen of the electronic device is not blocked, the electronic device cannot directly determine whether the user watches the screen. Therefore, the electronic device may further detect a face to determine whether the user watches the screen. That is, if the first sensor first detects that no blockage exists within the preset distance from the screen, the electronic device may enable the second sensor to detect whether the face exists. If the face is detected, the electronic device may determine that the user watches the screen, turn on the screen, and interact with the user in a graphical interface manner and a voice manner. If no face is detected, the electronic device may determine that the user does not watch the screen, and keep the screen-off state, and interact with the user only in the voice manner.

With reference to the first aspect, the first sensor, the second sensor, and the third sensor may all continuously work in a process in which the electronic device interacts with the user through the voice assistant.

In some embodiments, when, in a process in which the voice assistant interacts with the user in the first manner, the electronic device detects the second case, the electronic device may turn on the screen, so that the voice assistant interacts with the user in a second manner. In other words, if it is determined, when the voice assistant is started, that the user does not watch the screen, the electronic device may keep the screen-off state and interact with the user only in the voice manner. Further, in the foregoing process of interaction only in the voice manner, if it is determined that the user watches the screen, the electronic device may turn on the screen to interact with the user in the graphical interface manner and the voice manner.

In some embodiments, in the process in which the voice assistant interacts with the user in the first manner, the electronic device may receive a first voice input by the user, and recognize the first voice. When recognizing that the first voice meets a first condition, the electronic device may turn on the screen, and enable the voice assistant to interact with the user in a second manner. That the first voice meets a first condition may include: The first voice includes one or more of the following: a first-type keyword and a second-type keyword. The first-type keyword includes one or more of the following types of application names: a video type, a shopping type, and a navigation type. The second-type keyword includes one or more of the following verbs: view and display. In other words, the electronic device may further determine, by analyzing the received voice instruction input by the user, whether the user needs to watch the screen. For an application of a video type, a shopping type, or a navigation type, the user usually needs to watch the screen. When it is detected that the voice instruction includes the foregoing type of application, the electronic device may determine that the user needs to watch the screen. In addition, if the voice instruction includes a verb indicating that the user needs to watch the screen, for example, view or display, the electronic device may also consider that the user needs to watch the screen.

Because when the voice assistant is started, the electronic device determines, based on the first sensor and/or the second sensor, that the user does not watch the screen, the electronic device may first keep the screen-off state and interact with the user only in the voice manner. In the foregoing process of interaction only in the voice manner, if it is detected that the received voice instruction includes the first-type keyword and/or the second-type keyword, the electronic device may turn on the screen, and interact with the user in the graphical interface manner and the voice manner.

In some embodiments, in a process in which the voice assistant interacts with the user in the second manner, the electronic device detects the first case. Further, the electronic device may turn off the screen, and enable the voice assistant to interact with the user in the first manner. In other words, if the electronic device detects, by using one or more of the first sensor, the second sensor, and the third sensor, that the user watches the screen, the electronic device may turn on the screen, and interact with the user in the graphical interface manner and the voice manner. In the foregoing process of interacting with the user in the graphical interface manner and the voice manner, if it is detected that the user does not watch the screen (for example, the user leaves the electronic device, the face of the user is not opposite to the screen, or the user places the screen of the electronic device downward on the table), the electronic device may turn off the screen, and interact with the user only in the voice manner. In this way, sharing of the electronic device can be reduced, and an accidental touch can be avoided.

In the foregoing embodiment, in the process of interacting with the user in the graphical interface manner and the voice manner, the electronic device may, in response to a user operation of stopping voice playing by the user, interact with the user only in the graphical interface manner, instead of in the voice manner.

The first sensor, the second sensor, and the third sensor all continuously work in the process in which the electronic device interacts with the user through the voice assistant. In this way, the electronic device may detect in real time whether the user needs to watch the screen in a process of interaction between the voice assistant and the user. If it is detected that the user needs to watch the screen, the electronic device may turn on the screen. If it is detected that the user does not need to watch the screen, the electronic device may turn off the screen. It can be learned from the foregoing method that the electronic device may intelligently determine, in the process of interaction between the voice assistant and the user, whether to turn on the screen. This can not only reduce sharing of the electronic device, avoid accidental touch, but also improve user experience of using the voice assistant.

With reference to the first aspect, a time at which the electronic device detects the first case may include any one of the following:
the electronic device detects the first case when detecting the first operation;
the electronic device detects the first case at a first time after the first operation is detected, where an interval between the first time and a time at which the electronic device detects the first operation is less than first duration; or
the electronic device detects the first case at a second time before the first operation is detected, where an interval between the second time and the time at which the electronic device detects the first operation is less than second duration.

With reference to the first aspect, a time at which the electronic device detects the second case may include any one of the following:
the electronic device detects the second case when detecting the first operation;
the electronic device detects the second case at a first time after the first operation is detected, where an interval between the first time and a time at which the electronic device detects the first operation is less than first duration; or
the electronic device detects the second case at a second time before the first operation is detected, where an interval between the second time and the time at which the electronic device detects the first operation is less than second duration.

With reference to the first aspect, that the electronic device enables the voice assistant to interact with the user in a first manner may be specifically: The electronic device may enable the voice assistant to run only a first program. Alternatively, the electronic device may enable the voice assistant to run a second program and the first program.

The first program may be a program used to perform voice interaction with the user, and the second program may be a program used to obtain a graphical interface for interaction with the user.

With reference to the first aspect, that an electronic device detects a first operation when a screen is in a screen-off state may be specifically: The electronic device receives, when the screen is in the screen-off state, a second voice input by the user. The second voice may include a wake-up word used to start the voice assistant. Alternatively, the electronic device detects, when the screen is in the screen-off state, a touch-and-hold operation performed on a first button. The first button may include one or more of the following: a power button, a volume up button, and a volume down button.

According to a second aspect, an embodiment of this application provides an electronic device. The electronic device may include a screen, an input apparatus, a detection apparatus, and at least one processor. The detection apparatus includes one or more of the following: a first sensor and a second sensor. The input apparatus may be configured to detect a first operation of a user when the screen is in a screen-off state, where the first operation is used to start a voice assistant. The detection apparatus may be configured to: when the input apparatus detects the first operation of the user, detect whether a first case exists. The first case includes any one of the following:

The first sensor detects that no blockage exists within a preset distance from the screen, and the second sensor does not detect a face;
the second sensor does not detect a face; or
the first sensor detects that a blockage exists within the preset distance from the screen.

The processor may be configured to: when the detection apparatus detects the first case, start the voice assistant when the screen is kept in the screen-off state, and enable the voice assistant to interact with the user in a first manner. The first manner may be interacting with the user only through a voice.

With reference to the second aspect, the detection apparatus further includes a third sensor.

The detection apparatus may be further configured to detect whether a second case exists. The second case includes any one of the following:

The first sensor detects that no blockage exists within the preset distance from the screen, and the second sensor detects a face;
the first sensor detects that no blockage exists within the preset distance from the screen, and the third sensor detects that a posture of the electronic device is switched from a first posture to a second posture;
the second sensor detects a face; or
the third sensor detects that the posture of the electronic device is switched from the first posture to the second posture.

The processor may be further configured to: when the detection apparatus detects the second case, turn on the screen, start the voice assistant, and enable the voice assistant to interact with the user in a second manner. The second manner may include interacting with the user through a graphical interface.

In some embodiments, the second manner may be interacting with the user through a graphical interface and a voice.

In some embodiments provided in this application, the first sensor may include one or more of the following: an optical proximity sensor, an infrared sensor, and a radar sensor. The second sensor may include a camera. The third sensor may include a motion sensor. The motion sensor includes one or more of the following: an acceleration sensor and a gyroscope sensor.

With reference to the second aspect, the first sensor, the second sensor, and the third sensor may all continuously work in a process in which the electronic device interacts with the user through the voice assistant.

In some embodiments, the detection apparatus may be further configured to detect, in a process in which the voice assistant interacts with the user in the first manner, whether a second case exists. The processor may be further configured to: when the detection apparatus detects the second case, turn on the screen, and enable the voice assistant to interact with the user in a second manner, where the second manner includes interacting with the user through a graphical interface.

In some embodiments, the input apparatus may be further configured to receive, in the process in which the voice assistant interacts with the user in the first manner, a first voice input by the user. The processor may be further configured to: recognize the first voice, and when recognizing that the first voice meets a first condition, turn on the screen, and enable the voice assistant to interact with the user in a second manner. The second manner includes interacting with the user through a graphical interface. That the first voice meets a first condition may include: The first voice includes one or more of the following: a first-type keyword and a second-type keyword. The first-type keyword includes one or more of the following types of application names: a video type, a shopping type, and a navigation type. The second-type keyword includes one or more of the following verbs: view and display.

In some embodiments, the detection apparatus may be further configured to: detect, in the process in which the voice assistant interacts with the user in the second manner, whether the first case exists. The processor may be further configured to: when the detection apparatus detects the first case, turn off the screen, and enable the voice assistant to interact with the user in the first manner.

It can be learned from the foregoing method that when detecting that the user does not need to watch the screen, the electronic device may keep the screen in the screen-off state, and perform voice interaction with the user, thereby reducing power consumption of the electronic device and avoiding an accidental touch.

According to a third aspect, an embodiment of this application further provides a voice interaction method. The method includes: An electronic device may detect a first operation of a user when a screen is in a screen-off state, where the first operation is used to start a voice assistant. In a third case, the electronic device may start the voice assistant when the screen is kept in the screen-off state, and enable the voice assistant to interact with the user in a first manner. The first manner is to interact with the user only through a voice. The third case may include: A camera detects a face and a first gesture.

With reference to the third aspect, in a fourth case, the electronic device may turn on the screen, start the voice assistant, and enable the voice assistant to interact with the user in a second manner. The second manner includes interacting with the user through a graphical interface. The fourth case may include: The camera detects the face and does not detect the first gesture.

It can be learned from the foregoing voice interaction method that the electronic device may determine, based on an image collected by the camera, whether the face is detected and whether the first gesture is detected, so as to detect whether the user needs to watch the screen. The electronic device may determine, based on whether the camera needs to watch the screen, whether to turn on the screen when the voice assistant is started in the screen-off state. When it is detected that the user does not need to watch the screen, the electronic device may keep the screen in the screen-off state, and perform voice interaction with the user. In this way, in a scenario in which the user uses the electronic device and does not watch the screen of the electronic device, the user does not need to perform a corresponding operation to turn off the screen after the electronic device turns on the screen, thereby simplifying an operation of using the electronic device as a sound box by the user.

According to a fourth aspect, an embodiment of this application provides an electronic device. The electronic device may include a screen, an input apparatus, a camera, and at least one processor. The input apparatus may be configured to detect a first operation of a user when the screen is in a screen-off state, where the first operation is used to start a voice assistant. The camera may be configured to: when the input apparatus detects the first operation of the user, detect whether a third case exists, where the third case includes: The camera detects a face and a first gesture. The processor may be configured to: when the camera detects the third case, start the voice assistant when the screen is kept in the screen-off state, and enable the voice assistant to interact with the user in a first manner, where the first manner is to interact with the user only through a voice.

With reference to the fourth aspect, the camera may be further configured to detect whether a fourth case exists, where the fourth case includes: The camera detects the face but does not detect the first gesture. The processor may be further configured to: when the camera detects the fourth case, turn on the screen, start the voice assistant, and enable the voice assistant to interact with the user in a second manner, where the second manner includes interacting with the user through a graphical interface.

According to a fifth aspect, an embodiment of this application provides a chip. The chip is used in the electronic device provided in the second aspect or the electronic device provided in the fourth aspect. The chip includes one or more processors. The one or more processors are configured to invoke computer instructions, so that the electronic device provided in the second aspect performs any possible implementation of the first aspect, or the electronic device provided in the fourth aspect performs any possible implementation of the third aspect.

According to a sixth aspect, an embodiment of this application provides a computer program product including instructions. When the computer program product runs on a device, the electronic device provided in the second aspect is enabled to perform any possible implementation of the first aspect, or the electronic device provided in the fourth aspect is enabled to perform any possible implementation of the third aspect.

According to a seventh aspect, an embodiment of this application provides a computer-readable storage medium including instructions. When the instructions are run on a device, the electronic device provided in the second aspect is enabled to perform any possible implementation of the first aspect, or the electronic device provided in the fourth aspect is enabled to perform any possible implementation of the third aspect.

It may be understood that the chip provided in the fifth aspect, the computer program product provided in the sixth aspect, and the computer-readable storage medium provided in the seventh aspect are all configured to perform the methods provided in embodiments of this application. Therefore, for beneficial effects that can be achieved, refer to beneficial effects in the corresponding method. Details are not described herein again.

### BRIEF DESCRIPTION OF DRAWINGS

FIG. 1 is a schematic diagram of a structure of an electronic device according to an embodiment of this application;
FIG. 2 and FIG. 3 each are a schematic diagram of a scenario in which an electronic device keeps a screen in a screen-off state to perform voice interaction with a user according to an embodiment of this application;
FIG. 4A, FIG. 4B, FIG. 5A, FIG. 5B-1, FIG. 5B-2, FIG. 6A, and FIG. 6B each are a schematic diagram of a scenario in which an electronic device turns on a screen and interacts with a user in a graphical interface manner and a voice manner according to an embodiment of this application;
FIG. 7A to FIG. 7E are schematic diagrams of a group of voice interaction scenarios according to an embodiment of this application;
FIG. 8A to FIG. 8D are schematic diagrams of another group of voice interaction scenarios according to an embodiment of this application;
FIG. 9 is a schematic diagram of a voice interaction scenario according to an embodiment of this application;
FIG. 10 is a schematic diagram of another voice interaction scenario according to an embodiment of this application;
FIG. 11 is a schematic diagram of a structure of another electronic device according to an embodiment of this application;
FIG. 12 is a flowchart of a voice interaction method according to an embodiment of this application; and
FIG. 13 is a flowchart of another voice interaction method according to an embodiment of this application.

### DESCRIPTION OF EMBODIMENTS

The following clearly describes technical solutions in embodiments of this application in detail with reference to the accompanying drawings. In the descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

Descriptions such as "first", "second", ..., and the like in this specification are merely used to distinguish an object or operation from another object or operation, and do not necessarily require or imply that any actual relationship or sequence exists between these objects or operations, and do not necessarily require or imply relative importance or implicitly indicate a quantity of indicated technical features. Therefore, a feature limited by "first" or "second" may explicitly or implicitly include one or more features. In the descriptions of embodiments of this application, unless otherwise specified, "a plurality of" means two or more.

Currently, when a user performs voice interaction with an electronic device having a screen by using a voice assistant, the electronic device may output a voice to respond to a voice instruction of the user. In addition, the electronic device directly turns on the screen, and displays a user interface of the voice assistant and related content obtained by executing the received voice instruction. However, in some scenarios, for example, in a scenario in which the electronic device is placed in a pocket, when performing voice interaction with the electronic device by using the voice assistant, the user does not need to watch the screen. However, when the electronic device turns on the screen to display the user interface of the voice assistant, power of the electronic device is wasted, and an accidental touch is easily caused.

Based on the foregoing problem, embodiments of this application provide a voice interaction method and an electronic device. The electronic device may be provided with a detection apparatus, for example, a camera, an optical proximity sensor, or a motion sensor. In the method, when a first operation used to start a voice assistant is received, for example, when a voice input including a preset wake-up word is received, the electronic device may start the detection apparatus to detect whether a user needs to watch a screen. When it is detected, based on a detection result of the detection apparatus, that the user does not need to watch the screen, the electronic device may perform voice interaction with the user, and does not turn on the screen. In this way, in some scenarios in which the user does not need to watch the screen, the electronic device may interact with the user only in a voice manner, and does not turn on the screen, thereby reducing power consumption of the electronic device and reducing accidental touches.

For example, the electronic device may collect an image by using the camera, and detect, based on whether the image collected by the camera includes a face, whether the user needs to watch the screen. When the image collected by the camera does not include the face, the electronic device may run the voice assistant in the background, and interact with the user in the voice manner, without displaying the user interface of the voice assistant.

The electronic device may determine, by using the optical proximity sensor, whether the screen of the electronic device is blocked. When the screen of the electronic device is blocked, for example, the electronic device is placed in a pocket, or the screen of the electronic device is placed downward on a table, the user generally does not need to watch the screen. In other words, when it is detected, based on the optical proximity sensor, that the screen of the electronic device is blocked, the electronic device may run the voice assistant in the background, and interact with the user in the voice manner, without displaying the user interface of the voice assistant.

The electronic device may detect, by using the motion sensor, a posture change of the electronic device, and detect, based on the posture change of the electronic device, whether the user needs to watch the screen. For example, when the user picks up the electronic device and performs a hand raising action or a flipping action, a posture of the electronic device changes. The electronic device may turn on the screen, so as to raise a hand to turn on the screen. The electronic device may interact with the user in the voice manner without displaying the user interface of the voice assistant. When the electronic device detects the hand raising action, the electronic device may turn on the screen, display the user interface of the voice assistant, and interact with the user in the voice manner.

In embodiments of this application, in addition to the optical proximity sensor, the electronic device may detect, by using another type of sensor, whether the screen is blocked, for example, an infrared sensor or a radar sensor.

In addition to the camera, the electronic device may detect, by using another type of sensor, whether the screen is opposite to the face.

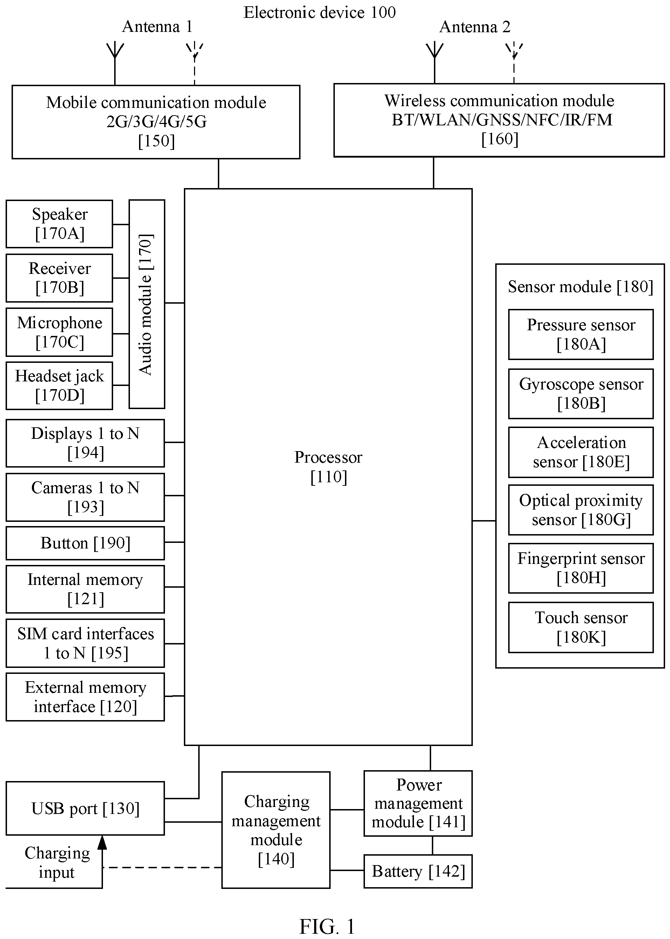

FIG. 1 is an example of a schematic diagram of a structure of an electronic device 100.

The electronic device 100 is used as an example below to describe the embodiment of this application in detail. It should be understood that the electronic device 100 shown in FIG. 1 is merely an example, and the electronic device 100 may have more or fewer components than those shown in FIG. 1, may combine two or more components, or may have different component configurations. Components shown in FIG. 1 may be implemented in hardware that includes one or more signal processing and/or application-specific integrated circuits, software, or a combination of hardware and software.

The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a camera 193, a display 194, a subscriber identification module (subscriber identification module, SIM) card interface 195, and the like. The sensor module 180 may include a pressure sensor 180A, a gyroscope sensor 180B, an acceleration sensor 180E, an optical proximity sensor 180G, a fingerprint sensor 180H, a touch sensor 180K, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

In some embodiments, the processor 110 may include a voice wake-up module and a voice instruction recognition module. The voice wake-up module and the voice instruction recognition module may be integrated in different processor chips, and are executed by different chips. For example, the voice wake-up module may be integrated in a coprocessor chip or a DSP chip with relatively low power consumption, and the voice instruction recognition module may be integrated in an AP chip, an NPU chip, or another chip. In this way, after the voice wake-up module recognizes a preset voice wake-up word, a chip in which the voice instruction recognition module is located may be started to trigger a voice instruction recognition function, so as to reduce power consumption of the electronic device. Alternatively, the voice wake-up module and the voice instruction recognition module may be integrated into a same processor chip, and the same chip performs a related function. For example, both the voice wake-up module and the voice instruction recognition module may be integrated into the AP chip, the NPU chip, or another chip.

The processor 110 may further include a voice instruction execution module. That is, after recognizing a voice instruction, the voice instruction execution module performs an operation corresponding to the voice instruction, for example, a voice assistant. The voice assistant may be an application including a voice instruction recognition function. After the voice instruction is recognized, the voice assistant may directly perform the operation corresponding to the voice instruction. Alternatively, if the operation corresponding to the voice instruction relates to a third application, the voice assistant may invoke the third application to perform the corresponding operation.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

The charging management module 140 is configured to receive a charging input from a charger. The charger may be a wireless charger or a wired charger. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization.

The mobile communication module 150 may provide a solution that includes wireless communication such as 2G/3G/4G/5G and that is applied to the electronic device 100. In some embodiments, at least some function modules of the mobile communication module 150 may be disposed in a same device as at least some modules of the processor 110.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding.

The internal memory 121 may be configured to store computer-executable program code. The executable program code includes instructions. The processor 110 runs the instructions stored in the internal memory 121, to perform various function applications of the electronic device 100 and data processing.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some function modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or a voice message is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function.

The pressure sensor 180A is configured to sense a pressure signal, and can convert the pressure signal into an electrical signal. In some embodiments, the pressure sensor 180A may be disposed in the display 194. When a force is applied to the pressure sensor 180A, capacitance between electrodes changes. The electronic device 100 determines pressure intensity based on a change in the capacitance. When a touch operation is performed on the display 194, the electronic device 100 detects intensity of the touch operation through the pressure sensor 180A. The electronic device 100 may also calculate a touch location based on a detection signal of the pressure sensor 180A.

The gyroscope sensor 180B may be configured to determine a moving posture of the electronic device 100. In some embodiments, an angular velocity of the electronic device 100 around three axes (namely, axes x, y, and z) may be determined through the gyroscope sensor 180B.

The acceleration sensor 180E may detect accelerations in various directions (usually on three axes) of the electronic device 100, and may detect magnitude and a direction of gravity when the electronic device 100 is still. The acceleration sensor may be further configured to identify a posture of the electronic device, and is used in an application such as switching between a landscape mode and a portrait mode, raising a hand to turn on a screen, or a pedometer.

The optical proximity sensor 180G may include, for example, a light-emitting diode (LED) and an optical detector such as a photodiode. The light-emitting diode may be an infrared light-emitting diode. The electronic device 100 emits infrared light by using the light-emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off the screen for power saving and preventing an accidental touch. The electronic device 100 may detect, by using the optical proximity sensor 180G when the voice assistant is started, whether the screen of the electronic device 100 is blocked, so as to interact with the user in a voice broadcast manner when the screen of the electronic device 100 is blocked, without turning on the screen, thereby saving power and preventing an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. In some other embodiments, the touch sensor 180K may also be disposed on a surface of the electronic device 100 at a location different from that of the display 194.

The button 190 includes a power button, a volume button, and the like. The button 190 may be a mechanical button, or may be a touch button. The electronic device 100 may receive a button input, and generate a button signal input related to a user setting and function control of the electronic device 100.

The SIM card interface 195 is used to connect to a SIM card. The SIM card may be inserted into the SIM card interface 195 or removed from the SIM card interface 195, to implement contact with or separation from the electronic device 100.

The following describes a method in which the electronic device 100 starts the voice assistant by recognizing a wake-up word.

In some embodiments, the electronic device 100 may receive a voice input by using the microphone. When the user says a wake-up voice near the electronic device 100, the voice input may include the wake-up voice. After receiving the voice input, the electronic device 100 may separate the wake-up voice of the user from the voice input. Then, the electronic device 100 may obtain a phoneme sequence by decoding from the wake-up voice in a voice signal of the user by using an acoustic model. After the phoneme sequence is decoded from the wake-up voice, the electronic device 100 may determine whether the decoded phoneme sequence matches a stored wake-up word phoneme sequence. If yes, it indicates that the wake-up voice includes the wake-up word. When determining that the wake-up voice includes the wake-up word, the electronic device 100 may start the voice assistant.

In some other embodiments, the electronic device 100 may receive a voice input by using the microphone. When the user says a wake-up voice near the electronic device 100, the voice input may include the wake-up voice. After receiving the voice input, the electronic device 100 may separate the wake-up voice of the user from the voice input. Then, the electronic device 100 may obtain a phoneme sequence by decoding from the wake-up voice in a voice signal of the user by using an acoustic model. Then, the electronic device 100 further obtains text information by decoding the decoded phoneme sequence by using a voice model and a pronunciation dictionary of the voice model. After obtaining the text information through decoding, the electronic device 100 may determine whether the text information obtained through decoding from the wake-up voice includes a stored wake-up word text. If yes, it indicates that the voice signal of the user includes the wake-up word. When determining that the wake-up voice includes the wake-up word, the electronic device 100 may start the voice assistant.

In this embodiment of this application, starting the voice assistant may be: The electronic device 100 starts the voice instruction recognition module and the voice instruction execution module in the application processor. The started voice instruction recognition module may be configured to recognize a voice instruction in the voice input collected by the microphone, and the started voice instruction execution module may be configured to execute the recognized voice instruction. Starting the voice assistant may also be referred to as waking up the voice assistant.

It should be noted that, when the voice wake-up function of the electronic device 100 is enabled, the voice wake-up module of the electronic device 100 may be in a working state in real time. When the voice wake-up module recognizes the wake-up word from the voice input collected by the microphone, the electronic device 100 may start the voice assistant.

For a process in which the electronic device 100 recognizes the voice instruction, refer to the foregoing process in which the electronic device 100 recognizes the wake-up word. Details are not described herein again.

In this embodiment of this application, the electronic device 100 may collect a voice input by using the microphone. The voice input may include a wake-up word and/or a voice instruction. When the user says the wake-up word and the voice instruction at a time, for example, "Xiaoyi Xiaoyi, I want to send an SMS message to Zhang San", the voice input obtained by the electronic device 100 may include the wake-up word and the voice instruction. When the user says only the wake-up word, for example, "Xiaoyi Xiaoyi", the voice input obtained by the electronic device 100 is the wake-up word. After the voice assistant is started, in a process in which the user performs voice interaction with the voice assistant, the user may say only the voice instruction, for example, "I want to send an SMS message to Zhang San", and the voice input obtained by the electronic device 100 is the voice instruction.

In addition to the foregoing starting the voice assistant by recognizing the wake-up word, the electronic device 100 may start the voice assistant by using another detected user operation. For example, in response to a user operation of touching and holding a power button, the electronic device 100 may start the voice assistant. A time of touching and holding the power button may be one second or two seconds. This is not limited in this embodiment of this application.

A first operation used to start the voice assistant is not limited in this embodiment of this application, and the first operation may alternatively be a user operation performed by another user to start the voice assistant.

In a possible implementation, the electronic device 100 may extract the wake-up word and a voiceprint feature of the user from the voice signal of the user. When the wake-up word matches a stored wake-up word template and the voiceprint feature of the user matches a stored voiceprint feature template, the electronic device 100 may start the detection apparatus (for example, an optical proximity sensor, a camera, or a motion sensor) to detect whether the user needs to watch the screen, and recognize the voice instruction input by the user subsequently. In this way, only a specific user can start the voice assistant to recognize and execute a voice instruction, thereby improving information security of a terminal.

**The following describes a voice interaction method provided in this embodiment of this application.**

The electronic device 100 whose screen is in the screen-off state may start the voice assistant and the detection apparatus in response to the first operation.

That the screen of the electronic device 100 is in the screen-off state may mean that the screen of the electronic device 100 is off. None of light-emitting devices, such as light-emitting diodes, included in the screen in the electronic device 100 emit light. Alternatively, that the screen of the electronic device 100 is in the screen-off state may mean that a small amount of the light-emitting devices included in the screen in the electronic device 100 emit light. For example, the electronic device 100 enables a screen turn-off display function. In response to a user operation of turning off the screen, for example, a user operation performed on the power button, the electronic device 100 may turn off the screen and display time on the screen. The screen-off state may also be referred to as a black screen state or a screen turn-off state.

In addition, the electronic device 100 may be in a screen-on state. The light emitting devices, such as the light emitting diodes, included in the screen in the electronic device 100 may all be in a light emitting state. In addition, the application processor of the electronic device 100 may be in a working state.

**The electronic device 100 may use an optical proximity sensor and a camera as the detection apparatus to detect whether the user needs to watch the screen.**

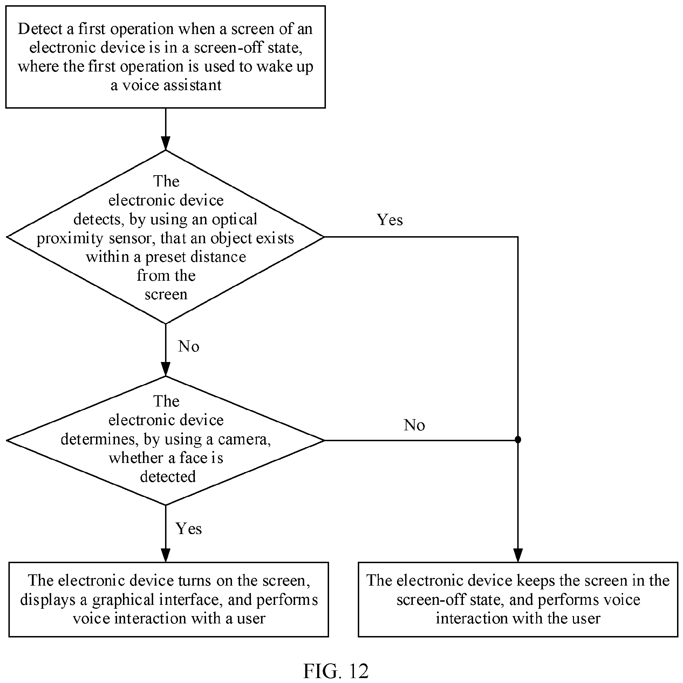

For a process of detecting, by the electronic device 100, whether the user needs to watch the screen, refer to the method flowchart shown in FIG. 12.

The following specifically uses the first operation as an example in which the user says a preset wake-up word (for example, "Xiaoyi Xiaoyi") for description.

The screen of the electronic device 100 is in the screen-off state. The voice wake-up function of the electronic device 100 is enabled. When the wake-up word is recognized from the voice input collected by the microphone, the electronic device 100 may first enable the optical proximity sensor, to detect whether a blockage exists within a preset distance from the screen.

That a blockage exists within a preset distance from the screen may indicate that the screen is blocked, and the user does not need to watch the screen of the electronic device. For example, the electronic device is placed in a pocket, and the screen of the electronic device is placed downward on a table.

If no blockage exists within the preset distance from the screen, it may indicate that the screen is not blocked. However, when the screen is not blocked, the user may need to watch the screen of the electronic device, or may not need to watch the screen of the electronic device. For example, the screen of the electronic device is placed upward on the table, but the user does not look at the screen.

When detecting, based on the optical proximity sensor, that a blockage exists within the preset distance from the screen, the electronic device 100 may keep the screen in the screen-off state, and perform voice interaction with the user. For example, when receiving a voice instruction "Query weather", the electronic device 100 may keep the screen in the screen-off state, and broadcast the weather through a voice. The voice instruction may also be, for example, "Make a call", "Send an SMS message", "Play music", or "Control a smart home device".

When detecting, based on the optical proximity sensor, that no blockage exists within the preset distance from the screen, the electronic device 100 may enable the camera to detect whether a face exists.

When the user needs to watch the screen, the face of the user is opposite to the screen, and stays for a period of time. The electronic device may collect, by using the camera (for example, a front-facing camera) in a continuous time period (for example, one second or two seconds), a plurality of frames of images that all include the face.

When the face of the user is not opposite to the screen, the images captured by the camera do not include the face. Alternatively, when the face of the user flashes in front of the screen, an image that does not include the face exists in the plurality of frames of images collected by the camera in a continuous time period. For the foregoing scenarios in which the face of the user is not opposite to the screen and the face of the user flashes in front of the screen, it may be considered that the user does not need to watch the screen in these scenarios.

When determining that an image that does not include the face exists in a plurality of frames of images collected by the camera within a preset time period, the electronic device 100 may keep the screen in the screen-off state, and perform voice interaction with the user.

When determining that the plurality of frames of images collected by the camera within the preset time period all include the face, the electronic device 100 may turn on the screen, display a graphical interface, and perform voice interaction with the user.

That a frame of image collected by the camera includes the face may indicate that the frame of image includes a complete face or a front face. If a frame of image includes a side face or an incomplete face, the electronic device 100 may determine that the frame of image does not include the face.

The graphical interface may be a user interface of the voice assistant. Alternatively, when the voice instruction involves displaying a user interface of a third application, for example, the voice instruction is "View a gallery" or "Play a video", the graphical interface may be the user interface of the third application.

In the foregoing voice interaction method, when the electronic device 100 interacts with the user only through a voice, the electronic device 100 may run a first program used to obtain a voice used for interaction with the user and a second program used to obtain a graphical interface used for interaction with the user. When determining that the user does not need to watch the screen, the electronic device 100 may keep the screen in the screen-off state. That is, the electronic device 100 does not display, on the screen, the graphical interface obtained by running the second program. When determining that the user needs to watch the screen, the electronic device 100 may turn on the screen, and display, on the screen, the graphical interface obtained by running the second program. In this way, when the electronic device 100 interacts with the user by using the voice assistant, if it is determined that the user needs to watch the screen, the electronic device 100 may quickly display, on the screen, the graphical interface obtained by running the second program, thereby reducing a delay in drawing the graphical interface.

Optionally, when the electronic device 100 interacts with the user only through the voice, the electronic device 100 may run only the first program. Then, the electronic device 100 may output, by using a speaker, a voice obtained by running the first program, to implement interaction with the user. The electronic device 100 may run the second program when determining that the user needs to watch the screen. Further, the electronic device 100 turns on the screen, and displays, on the screen, the graphical interface obtained by running the second program. In this way, the electronic device 100 may run only the first program when determining that the user does not need to watch the screen, thereby reducing power consumption.

Compared with power consumption of the camera, power consumption of the optical proximity sensor is lower. The electronic device 100 first determines, by using the optical proximity sensor, whether the screen is blocked, and when the screen is blocked, that is, when the user does not need to watch the screen, the electronic device 100 may keep the screen in the screen-off state, start and run the voice assistant in the background, and perform voice interaction with the user. When it cannot be determined, by using the optical proximity sensor, whether the user needs to watch the screen, that is, when the screen is not blocked, the electronic device 100 may enable the camera for further detection. In this way, the electronic device 100 can reduce power consumption when detecting whether the user needs to watch the screen.

It should be noted that, in the foregoing voice interaction method, a time sequence of starting the voice assistant and starting the detection apparatus by the electronic device 100 is not limited in this embodiment of this application.

In a possible implementation, the optical proximity sensor and the camera may be in a working state in real time. The electronic device may obtain, after detecting the first operation, data collected by the optical proximity sensor and/or the camera, to determine whether the user needs to watch the screen.

In a possible implementation, when starting the voice assistant, the electronic device 100 may output a starting prompt, to prompt the user to input a voice instruction. The starting prompt may be one or more of a voice prompt, a text prompt, or a mechanical vibration prompt. For example, the voice prompt may be that the electronic device 100 plays "Hi, I am listening" by a voice. The text prompt may be that the electronic device 100 displays a text "Hi, I am listening" on the screen.

Optionally, in response to the first operation, the electronic device 100 may simultaneously start the voice assistant and the detection apparatus. The electronic device 100 may first output the starting prompt in a voice manner when the screen is in the screen-off state. In other words, the electronic device 100 may first play "Hi, I am listening" by the voice. After the detection apparatus performs detection, the electronic device 100 may determine whether to turn on the screen. For example, when determining that the face is detected, the electronic device 100 may turn on the screen, and output the starting prompt in a text manner. In other words, the electronic device 100 may display the text "Hi, I am listening" on the screen. If it is detected, based on the detection apparatus, that the user does not need to watch the screen, the electronic device 100 may keep the screen in the screen-off state.

Optionally, in response to the first operation, the electronic device 100 may first start the detection apparatus to perform detection, and then start the voice assistant after determining whether the user needs to watch the screen. If the detection apparatus detects that the user needs to watch the screen, the electronic device 100 may turn on the screen, display the text "Hi, I am listening", and broadcast the voice "Hi, I am listening" by the voice. In other words, the electronic device 100 may output the starting prompt in a text and voice manner. If it is detected, based on the detection apparatus, that the user does not need to watch the screen, the electronic device 100 may keep the screen in the screen-off state, and output the starting prompt in the voice manner.

The following specifically describes the voice interaction method provided in this application with reference to an application scenario.

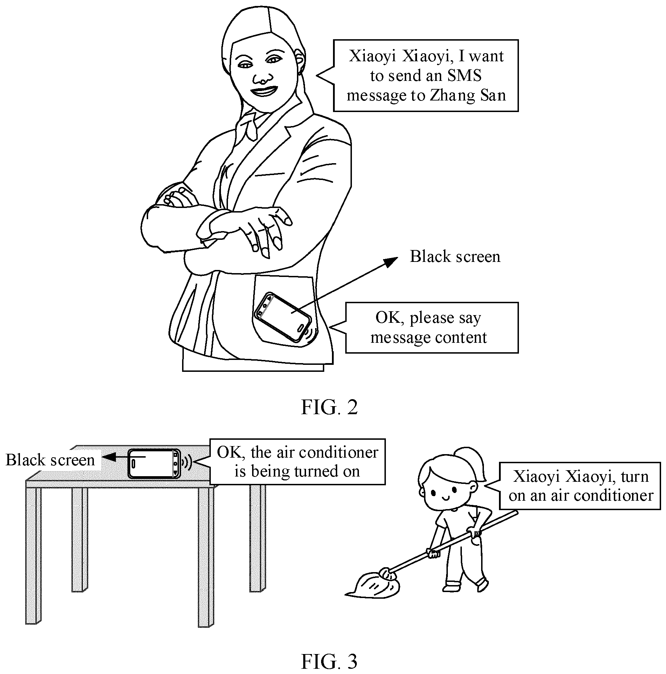

**FIG. 2** **is an example of a schematic diagram of a scenario in which an electronic device keeps a screen in a screen-off state to perform voice interaction with a user.**

As shown in FIG. 2, the electronic device 100 is placed in a pocket. The screen of the electronic device 100 is in the screen-off state. The voice wake-up function of the electronic device 100 is enabled, the microphone may collect a voice input near the electronic device 100 in real time, and the electronic device 100 may recognize whether the voice input includes a preset wake-up word. In this way, the user may start the voice assistant by saying the preset wake-up word.

When the user says "Xiaoyi Xiaoyi, I want to send an SMS message to Zhang San" near the electronic device 100, the electronic device 100 may recognize the wake-up word "Xiaoyi Xiaoyi". Further, the electronic device 100 may start the detection apparatus to detect whether the user needs to watch the screen. When the optical proximity sensor is enabled for detection, the electronic device 100 may determine that the screen is blocked. Further, the electronic device 100 may keep the screen in the screen-off state (that is, the screen is in a black screen state), run the voice assistant in the background, and perform voice interaction with the user. When the voice instruction "I want to send an SMS message to Zhang San" is recognized, the electronic device 100 may perform an operation corresponding to the voice instruction. For example, the electronic device 100 may invoke an address book application to check whether a contact whose name is "Zhang San" exists. If it is determined that the contact exists, the electronic device 100 may give a voice prompt of "OK, please say SMS message content" by using the speaker, and invoke an SMS message application to provide a service of sending an SMS message for the user.

In this way, when the screen is blocked, for example, the screen is placed in a pocket, and the screen is placed downward on a table, the electronic device 100 may keep the screen in the screen-off state, and perform voice interaction with the user, thereby reducing power consumption of the electronic device and avoiding an accidental touch.

**FIG. 3** **is an example of a schematic diagram of another scenario in which an electronic device keeps a screen in a screen-off state to perform voice interaction with a user**.

As shown in FIG. 3, the screen of the electronic device 100 is placed upward on a table. The screen of the electronic device 100 is in the screen-off state. The voice wake-up function of the electronic device 100 is enabled.

When the user says "Xiaoyi Xiaoyi, turn on an air conditioner" near the electronic device 100, the electronic device 100 may recognize the wake-up word "Xiaoyi Xiaoyi". Further, the electronic device 100 may start the detection apparatus to detect whether the user needs to watch the screen. When the optical proximity sensor is enabled for detection, the electronic device 100 may determine that the screen is not blocked. Then, the electronic device 100 may enable the camera. The electronic device 100 may determine, based on an image collected by the camera, that no face is detected. Further, the electronic device may keep the screen in the screen-off state, run the voice assistant in the background, and perform voice interaction with the user. When the voice instruction "turn on an air conditioner" is recognized, the electronic device 100 may perform an operation corresponding to the voice instruction. For example, the electronic device 100 may invoke an application for controlling a smart home device when keeping the screen in the screen-off state, to turn on the air conditioner. In addition, the electronic device 100 may give a voice prompt of "OK, the air conditioner is being turned on" by using the speaker, to reply to the voice instruction said by the user. In this way, the user may learn that the electronic device 100 has started the voice assistant to recognize and execute the voice instruction.

In the foregoing embodiment, when the screen is not blocked, the electronic device 100 may enable the camera for further detection. In this way, whether the user needs to watch the screen can be more accurately determined. In a scenario in which the screen is not blocked and no face is detected, the electronic device may keep the screen in the screen-off state, and perform voice interaction with the user, thereby reducing power consumption of the electronic device.

In addition to the foregoing scenarios of sending the SMS message and controlling the smart home device (such as an air conditioner, a light, a television, or a sound box), the electronic device may further keep the screen in the screen-off state based on a detection result of the detection apparatus when detecting that the user does not need to watch the screen, and provide functions such as playing music, making and answering a call, querying weather, and navigation for the user in the voice manner.

It should be noted that, in embodiments shown in FIG. 2 and FIG. 3, if it is recognized that the voice instruction of the user is to display a user interface of a specific application, for example, the voice instruction is "View a gallery" or "Play a video", it is difficult for the electronic device 100 to broadcast, to the user only in a voice interaction manner, a user interface of an application such as a gallery application or a video application. In the foregoing application scenario of displaying the user interface of the specific application, the user usually watches the screen of the electronic device, that is, the electronic device may generally detect, by using the optical proximity sensor and the camera, that the user needs to watch the screen. In the foregoing application scenario, if the electronic device detects, by using the optical proximity sensor, that the screen is blocked, or detects, by using the optical proximity sensor, that the screen is not blocked, and does not detect a face by using the camera, the electronic device 100 may keep the screen in the screen-off state, and give a voice prompt of "Found it. Come and check it out." by using the speaker. Further, when the user views the screen based on the voice prompt of the electronic device, the electronic device may detect, by using the optical proximity sensor and the camera, that the user needs to watch the screen. In this way, the electronic device 100 may turn on the screen, and display a user interface of a related application.

In this way, when detecting that the user does not need to watch the screen, the electronic device may keep the screen in the screen-off state, and perform voice interaction with the user, thereby reducing power consumption of the electronic device and avoiding an accidental touch.

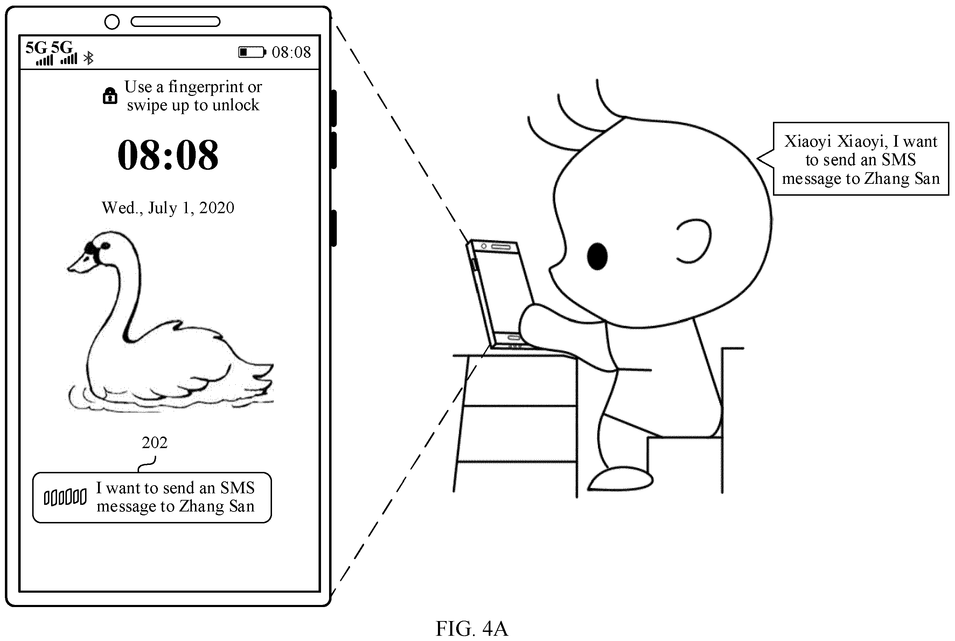

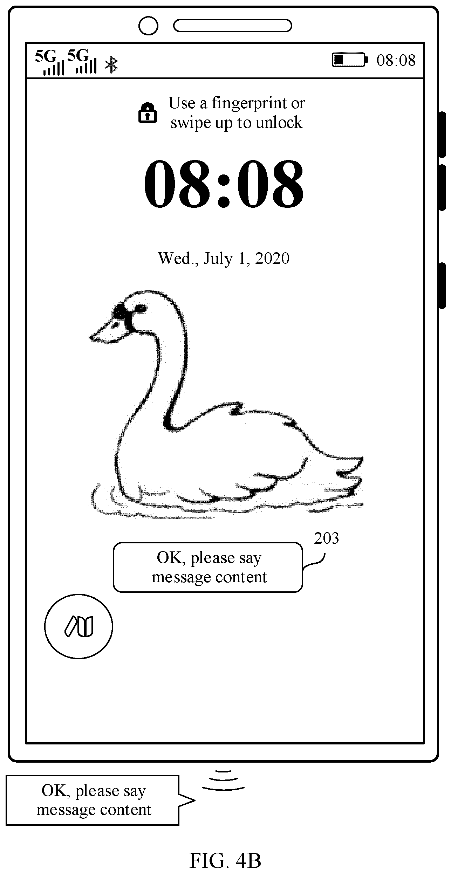

**FIG. 4A** **and** **FIG. 4B** **each are an example of a schematic diagram of a scenario in which an electronic device turns on a screen and interacts with a user in a graphical interface manner and a voice manner.**

As shown in FIG. 4A, the user holds the electronic device 100, and keeps the face opposite to the screen of the electronic device 100. The screen of the electronic device 100 is in the screen-off state. The voice wake-up function of the electronic device 100 is enabled.

When the user says "Xiaoyi Xiaoyi, I want to send an SMS message to Zhang San" near the electronic device 100, the electronic device 100 may recognize the wake-up word "Xiaoyi Xiaoyi". Further, the electronic device 100 may start the detection apparatus to detect whether the user needs to watch the screen. When the optical proximity sensor is enabled to perform detection, the electronic device 100 may detect that the screen is not blocked. Then, the electronic device 100 may enable the camera. The electronic device 100 may determine, based on an image collected by the camera, that the face is detected.

Further, the electronic device 100 may run the voice assistant, and display the user interface of the voice assistant, for example, display a voice-to-text box 202 shown in FIG. 4A. The voice-to-text box 202 may be used to display a voice instruction "I want to send an SMS message to Zhang San" recognized by the electronic device 100. In this way, the user may compare whether the voice instruction recognized by the electronic device 100 is consistent with the voice instruction said by the user.

When the voice instruction is recognized, the electronic device 100 may perform an operation corresponding to the voice instruction. For example, in response to the voice instruction "I want to send an SMS message to Zhang San", the electronic device 100 may first invoke the address book application to check whether the contact whose name is "Zhang San" exists. If it is determined that the contact exists, the electronic device 100 may prompt the user to say the SMS content in a text display manner and a voice broadcast manner. For example, the electronic device 100 may display a user interface shown in FIG. 4B, and give a voice prompt of "OK, please say the SMS content" by using the speaker to prompt the user to say the SMS content.

The user interface shown in FIG. 4B may include a text prompt box 203. Content in the text prompt box 203 may be the same as content of the voice prompt of the electronic device 100, for example, "OK, please say the SMS content".

In the foregoing embodiment, in a scenario in which the screen is not blocked and the face is detected, the electronic device may turn on the screen to display the user interface of the voice assistant, or when recognizing that the voice instruction involves displaying the user interface of the third application, the electronic device may invoke the third application to display the user interface of the third application. The electronic device may further interact with the user in the voice broadcast manner. The electronic device may intelligently determine whether to turn on the screen. When it is detected that the user needs to watch the screen, the electronic device may interact with the user in the graphical interface and the voice manner, thereby providing good user experience.

The content of the voice broadcast of the electronic device and content of the text prompt are not limited in this embodiment of this application.

**In some embodiments, the electronic device 100 may detect, by using only the optical proximity sensor, whether the user needs to watch the screen.**

Specifically, the screen of the electronic device 100 is in the screen-off state. In response to the first operation used to start the voice assistant, the electronic device 100 may enable the optical proximity sensor. For example, if the first operation is that the user says the wake-up word, the voice wake-up module in the electronic device 100 may obtain and process a voice input collected by the microphone. When determining that the voice input includes the preset wake-up word, the electronic device 100 may enable the optical proximity sensor.

If it is determined, based on a detection result of the optical proximity sensor, that the screen is blocked, the electronic device 100 may keep the screen in the screen-off state, run the voice assistant in the background, and perform voice interaction with the user.

If it is determined, based on the detection result of the optical proximity sensor, that the screen is not blocked, the electronic device 100 may turn on the screen and run the voice assistant. The electronic device 100 may display the user interface of the voice assistant, and perform voice interaction with the user. In this way, the electronic device 100 may interact with the user in the graphical interface manner and the voice manner.

Optionally, the optical proximity sensor may be in the working state in real time. If the electronic device 100 determines, by using the optical proximity sensor within a preset time period before the first operation is received, that the screen is not blocked, the electronic device 100 may start the voice assistant after the first operation is received. The electronic device 100 may turn on the screen, and interact with the user in the graphical interface manner and the voice manner. The preset time period before the first operation is received may be one second or two seconds. This is not limited in embodiments of this application.

**In some embodiments, the electronic device 100 may detect, by using only the camera, whether the user needs to watch the screen.**

Specifically, the screen of the electronic device 100 is in the screen-off state. In response to the first operation used to start the voice assistant, the electronic device 100 may enable the camera. For example, if the first operation is that the user says the wake-up word, the voice wake-up module in the electronic device 100 may obtain and process a voice input collected by the microphone. When determining that the voice input includes the preset wake-up word, the electronic device 100 may enable the camera.

When determining that an image that does not include the face exists in a plurality of frames of images collected by the camera within a preset time period, the electronic device 100 may keep the screen in the screen-off state, run the voice assistant in the background, and perform voice interaction with the user.

When determining that the plurality of frames of images collected by the camera within the preset time period all include the face, the electronic device 100 may turn on the screen and run the voice assistant. The electronic device 100 may display the user interface of the voice assistant, and perform voice interaction with the user. In this way, the electronic device 100 may interact with the user in the graphical interface manner and the voice manner.

Optionally, the camera may be in the working state in real time. If the electronic device 100 detects the face by using the camera within a preset time period before the first operation is received, the electronic device 100 may start the voice assistant after the first operation is received. The electronic device 100 may turn on the screen, and interact with the user in the graphical interface manner and the voice manner. The preset time period before the first operation is received may be one second or two seconds. This is not limited in embodiments of this application.

**In some embodiments, the electronic device 100 may detect, by using only the motion sensor, whether the user needs to watch the screen.**

Specifically, the screen of the electronic device 100 is in the screen-off state. In response to the first operation used to start the voice assistant, the electronic device 100 may enable the motion sensor. For example, if the first operation is that the user says the wake-up word, the voice wake-up module in the electronic device 100 may obtain and process a voice input collected by the microphone. When determining that the voice input includes the preset wake-up word, the electronic device 100 may enable the motion sensor. The motion sensor may include an acceleration sensor and a gyroscope sensor. The motion sensor may be configured to detect a posture change of the electronic device 100. In addition to the acceleration sensor and the gyroscope sensor, the motion sensor may be another type of sensor that can be configured to detect the posture change of the electronic device 100.

When the electronic device 100 does not detect a hand raising action based on the motion sensor, the electronic device 100 may keep the screen in the screen-off state, run the voice assistant in the background, and perform voice interaction with the user. The electronic device 100 detects the hand raising action, and the posture change of the electronic device may be: When the screen is facing upward, the electronic device 100 changes from a horizontally placed posture to a tilted or vertically placed posture.

When the electronic device 100 detects the hand raising action based on the motion sensor, the electronic device 100 may turn on the screen and run the voice assistant. The electronic device 100 may display the user interface of the voice assistant, and perform voice interaction with the user. In this way, the electronic device 100 may interact with the user in the graphical interface manner and the voice manner.

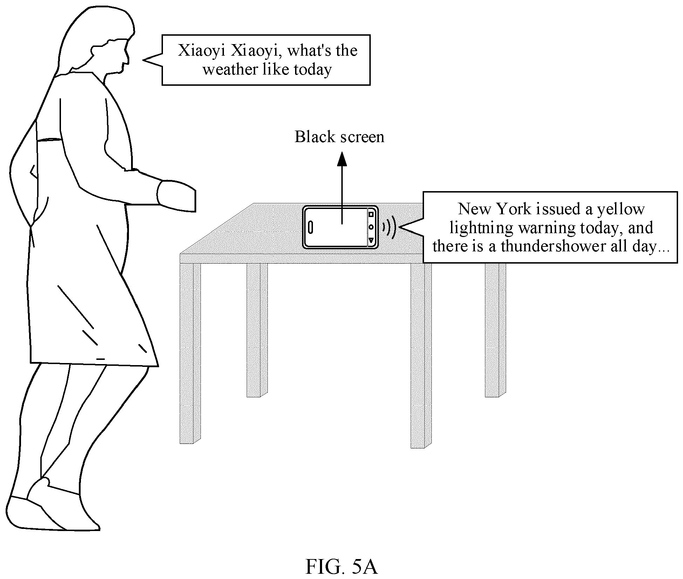

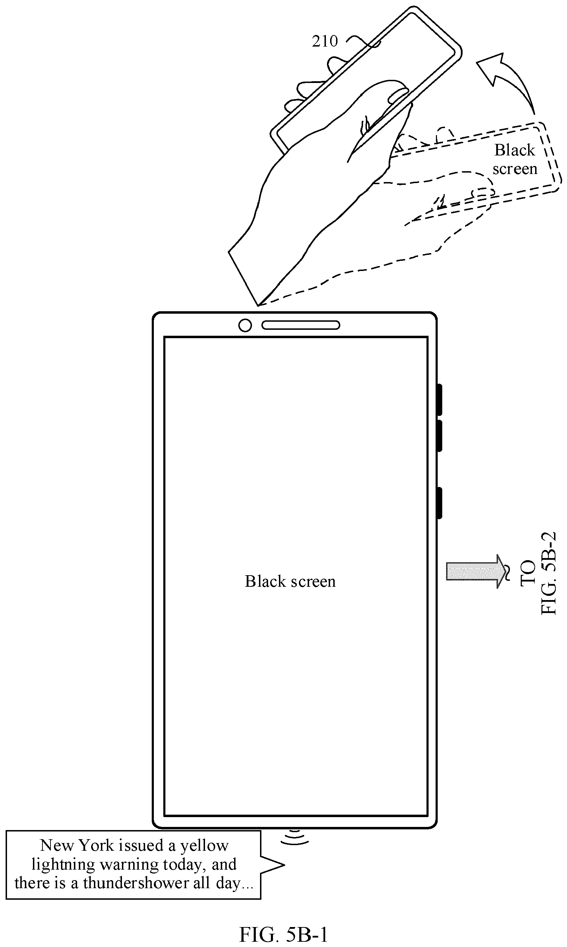

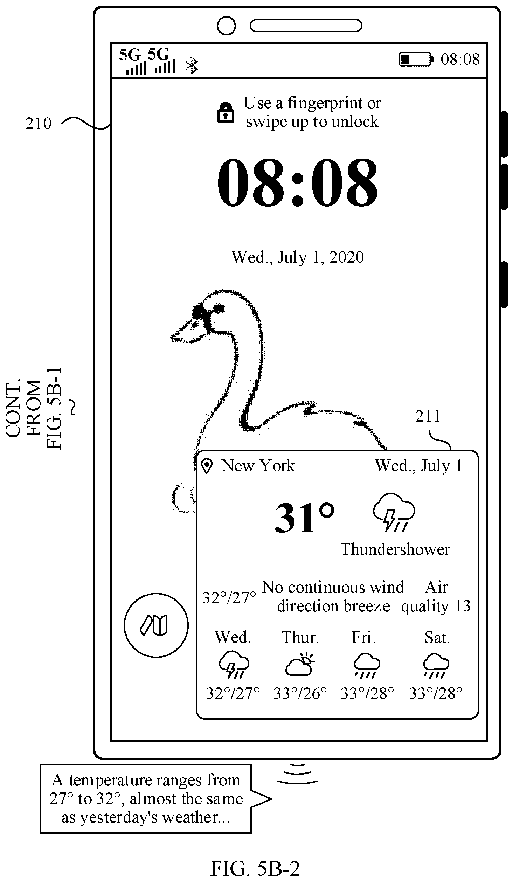

FIG. 5A, FIG. 5B-1, FIG. 5B-2, FIG. 6A, and FIG. 6B each show an example of a schematic diagram of a scenario in which the electronic device 100 intelligently determines, based on the motion sensor, whether to turn on the screen when running the voice assistant.

As shown in FIG. 5A, the screen of the electronic device 100 is in the screen-off state. In response to the first operation (for example, the user says the wake-up word "Xiaoyi Xiaoyi"), the electronic device 100 may enable the motion sensor. When no hand raising action is detected, the electronic device 100 may keep the screen in the screen-off state, and perform voice interaction with the user. For example, in response to a voice instruction "What's the weather like today" by the user asking about the weather of the day, the electronic device 100 may search for the weather, and give a voice broadcast of the weather of the day by using the speaker: "New York issued a yellow lightning warning today, and there is a thundershower all day...".

In a process of giving the voice broadcast of the weather by the electronic device 100, if the hand raising action is detected, the electronic device 100 may turn on the screen, display a user interface 210 shown in FIG. 5B-1 and FIG. 5B-2, and continue to give a voice broadcast of the weather. The user interface 210 may include a text prompt box 211. The text prompt box 211 may be configured to display data such as a location, a date, and weather by using an icon and a text.

In addition to the foregoing hand raising action, when the motion sensor detects a flipping action and a pocket pulling action, the electronic device 100 may turn on the screen, start and run the voice assistant, and interact with the user in the graphical interface and the voice manner.

Optionally, the motion sensor may be in a working state in real time. If the electronic device 100 detects, by using the motion sensor, a hand raising action within a preset time period before the first operation is received, the electronic device 100 may start the voice assistant after the first operation is received. The electronic device 100 may turn on the screen, and interact with the user in the graphical interface manner and the voice manner. The preset time period before the first operation is received may be one second or two seconds. This is not limited in embodiments of this application.

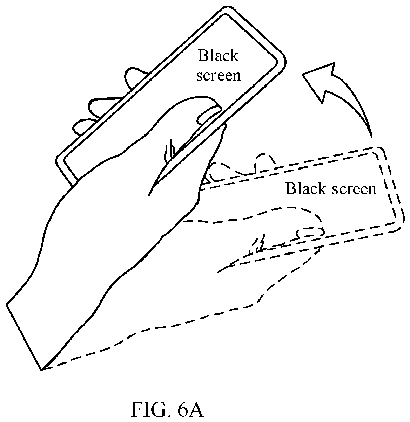

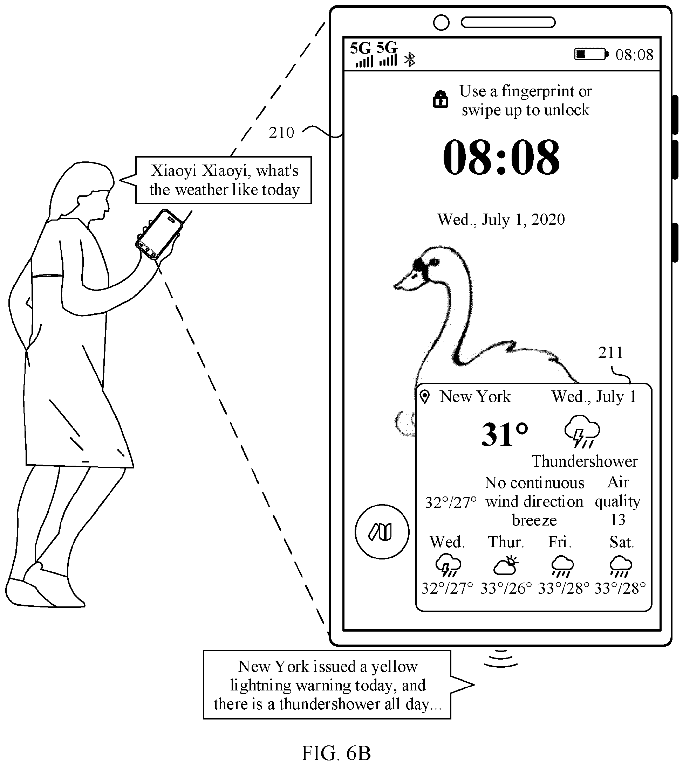

For example, as shown in FIG. 6A, the screen of the electronic device 100 is in the screen-off state. The electronic device 100 may detect the hand raising action by using the motion sensor. The screen of the electronic device 100 remains in the screen-off state. As shown in FIG. 6B, if the wake-up word "Xiaoyi Xiaoyi" is detected within a preset time period (for example, one second or two seconds) of detecting the hand raising action, the electronic device 100 may turn on the screen, and execute the voice instruction of the user: "What's the weather like today". The electronic device 100 may display the user interface 210 shown in FIG. 6B, and give the voice broadcast of the weather of the day by using the speaker: "New York issued a yellow lightning warning today, and there is a thundershower all day...".

In other words, the user may first pick up the mobile phone and perform the hand raising action. If the user says the wake-up word within a preset time period after the user performs the hand raising action, for example, within one second or two seconds, the electronic device 100 may start the voice assistant, turn on the screen, and interact with the user in the graphical interface and the voice manner.

Optionally, the motion sensor may be in the working state in real time. If the electronic device 100 detects the hand raising action while receiving the first operation, the electronic device 100 may start the voice assistant after receiving the first operation. The electronic device 100 may turn on the screen, and interact with the user in the graphical interface manner and the voice manner.

In other words, if the user picks up the mobile phone to perform the hand raising action and says the wake-up word, the electronic device 100 may start the voice assistant, turn on the screen, and interact with the user in the graphical interface and the voice manner.

**In some embodiments, the electronic device 100 may detect, with reference to the optical proximity sensor and the motion sensor, whether the user needs to watch the screen.**

Specifically, the screen of the electronic device 100 is in the screen-off state. In response to the first operation used to start the voice assistant, the electronic device 100 may first enable the optical proximity sensor. For example, if the first operation is that the user says the wake-up word, the voice wake-up module in the electronic device 100 may obtain and process a voice input collected by the microphone. When determining that the voice input includes the preset wake-up word, the electronic device 100 may enable the optical proximity sensor.

The electronic device 100 may detect, by using the optical proximity sensor, whether the screen is blocked. If it is determined that the screen is blocked, the electronic device 100 may keep the screen in the screen-off state, run the voice assistant in the background, and perform voice interaction with the user.

If it is determined that the screen is not blocked, the electronic device 100 may enable the motion sensor. The electronic device 100 may detect the posture change of the electronic device 100 based on the motion sensor. For example, when detecting the hand raising action, the electronic device 100 may turn on the screen, run the voice assistant, and interact with the user in the graphical interface manner and the voice manner.

The following describes a time at which the electronic device 100 performs detection by using the detection apparatus (such as the optical proximity sensor, the camera, or the motion sensor).

**In some embodiments, the detection apparatus may continuously perform detection after the electronic device 100 receives the first operation until the voice interaction ends.**

The end of the voice interaction may indicate that the voice assistant stops running, and the user needs to perform the first operation mentioned in the foregoing embodiment again to start the voice assistant. For example, in an application scenario in which the voice instruction is sending an SMS message, after an SMS message application is invoked to send the SMS message, the electronic device 100 may stop running the voice assistant. Alternatively, in an application scenario in which the voice instruction is querying weather, after the weather is broadcast, the electronic device 100 may stop running the voice assistant. When the voice interaction ends, in response to the first operation, the electronic device 100 may start and run the voice assistant again.

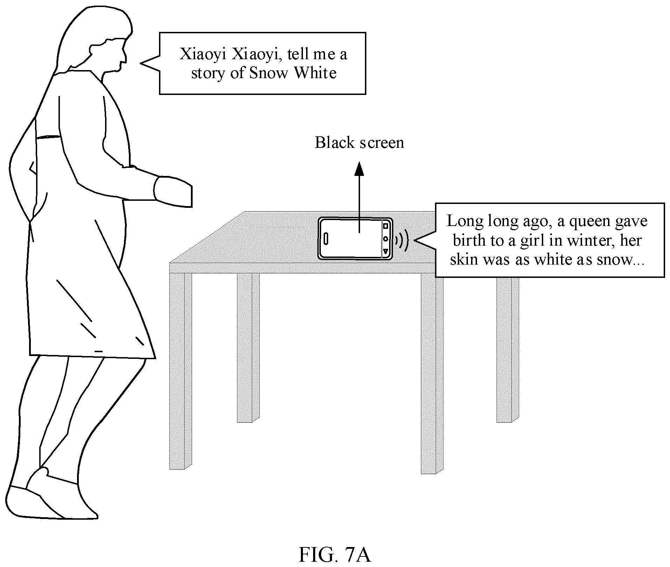

FIG. 7A to FIG. 7E each are an example of a schematic diagram of a scenario in which the detection apparatus continuously performs detection in a process from a time when the electronic device 100 recognizes the wake-up word of the voice assistant to a time when the voice interaction ends.

As shown in FIG. 7A, the screen of the electronic device 100 is placed upward on a table. The screen of the electronic device 100 is in the screen-off state. The voice wake-up function of the electronic device 100 is enabled.

When the user says "Xiaoyi Xiaoyi, tell me a story of Snow White" near the electronic device 100, the voice wake-up module in the electronic device 100 may recognize the wake-up word "Xiaoyi Xiaoyi". Further, the electronic device 100 may start the detection apparatus to detect whether the user needs to watch the screen.

Specifically, when the optical proximity sensor is enabled for detection, the electronic device 100 may detect that the screen is not blocked. Then, the electronic device 100 may enable the camera. The electronic device 100 may determine, based on an image collected by the camera, that the face is detected. Further, the electronic device may run the voice assistant in the background to perform voice interaction with the user. The electronic device 100 may recognize, from a voice input collected by the microphone, a voice instruction "Tell me the story of Snow White", and perform an operation corresponding to the voice instruction. For example, the electronic device 100 may invoke a browser application to search for the story of "Snow White" when the screen is kept in the screen-off state, and give a voice broadcast of the story by using the speaker: "Long long ago, a queen gave birth to a girl in winter...".

In the foregoing embodiment, in a process from recognizing the wake-up word to ending the voice interaction, the electronic device 100 may continuously detect, by using the detection apparatus, whether the user needs to watch the screen, and intelligently determine, based on a determining result, whether to turn on the screen.

In a possible implementation, the optical proximity sensor and the camera are in a disabled state. When the wake-up word is recognized, the electronic device 100 may first enable the optical proximity sensor to detect whether the screen is blocked.

If it is determined, at a first moment, that the screen is not blocked, the electronic device 100 may disable the optical proximity sensor and enable the camera at the first moment. The electronic device 100 may first perform detection by using the optical proximity sensor, and after determining that the screen is not blocked, enable the camera for detection. In other words, the camera may be in the disabled state when the screen is blocked. The electronic device 100 may disable the camera when the voice interaction ends.

The electronic device 100 may detect, based on the camera, whether there is a face. When no face is detected, the electronic device 100 may keep the screen in the screen-off state, and perform voice interaction with the user. When the face is detected, the electronic device 100 may turn on the screen, and display a corresponding user interface on the screen. In this way, the electronic device 100 may interact with the user in the graphical interface manner and the voice manner.

It can be learned from the foregoing analysis that a working time of the optical proximity sensor may start from a time when the wake-up word is recognized and end at the first moment at which it is determined that the screen is not blocked. A working time of the camera may start from the first moment and end when the voice interaction ends. If the screen is always in a blocked state, the electronic device 100 may enable only the optical proximity sensor for detection, thereby reducing power consumption.

As shown in FIG. 7A, the screen of the electronic device 100 is placed upward on the table. The electronic device 100 may determine, based on the optical proximity sensor, that the screen is not blocked. Then, the electronic device 100 may enable the camera for detection.

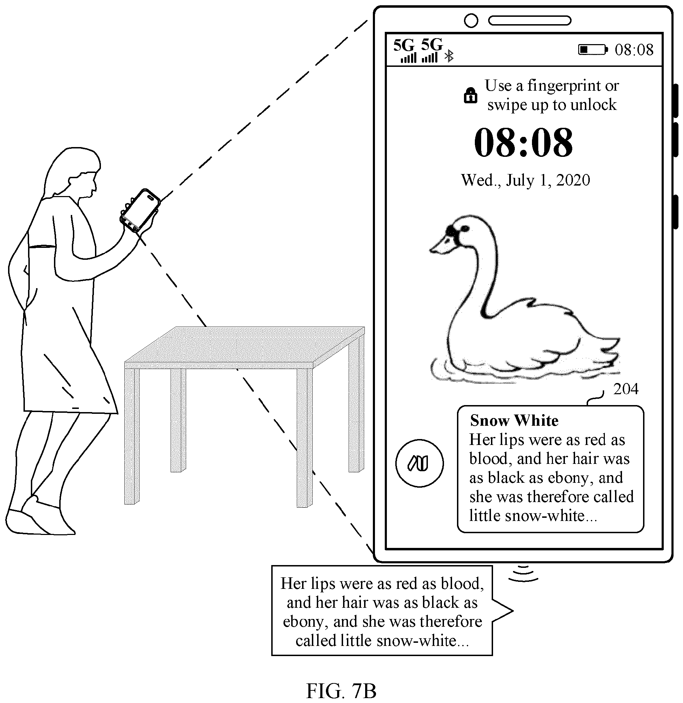

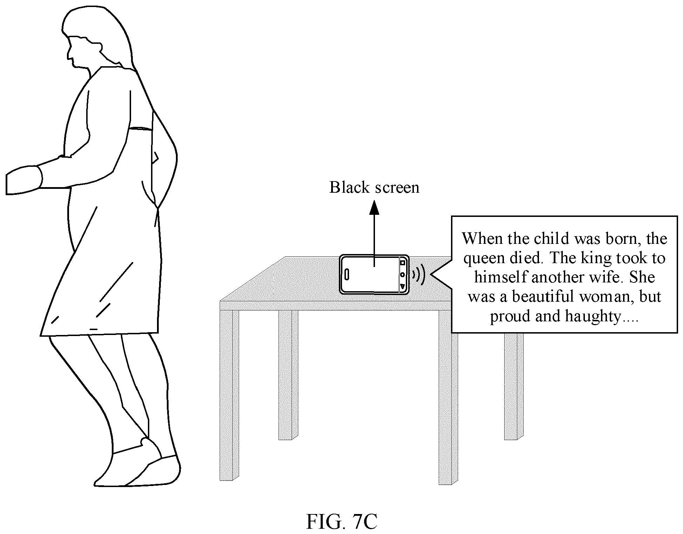

As shown in FIG. 7B, the user walks towards the electronic device 100 and picks up the electronic device 100. The face of the user is opposite to the screen of the electronic device 100. The electronic device 100 may detect the face based on an image collected by the camera. The electronic device 100 may turn on the screen, to display a user interface shown in FIG. 7B. The user interface may include a text prompt box 204. The text prompt box 204 may be configured to display a result found by the electronic device 100 according to the recognized voice instruction. For example, the voice instruction is "Tell me a story of Snow White", and the text prompt box 204 may display the story of "Snow White" found by the electronic device 100: "Her lips were as red as blood, and her hair was as black as ebony...". As shown in FIG. 7C, the user puts down and leaves the electronic device 100. The electronic device 100 is placed on the table. The camera of the electronic device 100 is in the working state. When it is determined, based on the image collected by the camera, that no face is detected, for example, when an image that does not include the face exists in a plurality of frames of images collected by the camera within a preset time period, the electronic device 100 may turn off the screen, and interact with the user in the voice manner. For example, the electronic device 100 may turn off the screen, and continue to give a voice broadcast of the story of Snow White.

When the story of Snow White is broadcast by a voice, the electronic device 100 may stop running the voice assistant, and disable the camera.

Working times of the optical proximity sensor and the camera are not limited in embodiments of this application. For example, when the wake-up word is recognized, the electronic device 100 may enable the optical proximity sensor and the camera. When the voice interaction ends, the electronic device 100 may disable the optical proximity sensor and the camera. Alternatively, the optical proximity sensor and the camera may work alternately in a process from recognizing the wake-up word to ending the voice interaction.

In a possible implementation, when interacting with the user in the graphical interface manner and the voice manner, the electronic device 100 may stop interacting or continue to interact with the user in the voice manner in response to a related user operation.

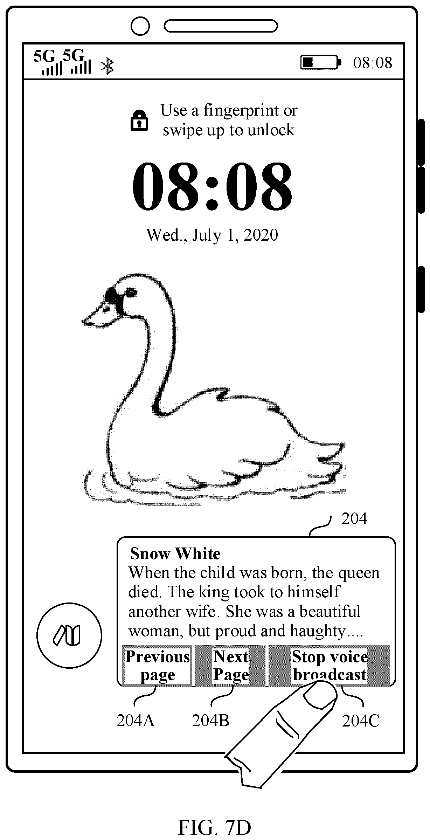

As shown in FIG. 7D, when it is detected, based on the detection apparatus, that the user needs to watch the screen, the electronic device 100 may display the user interface of the voice assistant, and perform voice interaction with the user. For example, the electronic device 100 may display the text prompt box 204 shown in FIG. 7D. The text prompt box 204 may include text content of the story of "Snow White", and may further include a previous page control 204A, a next page control 204B, and a stop voice broadcast control 204C. The previous page control 204A and the next page control 204B may be used to control text content displayed in the text prompt box 204. For example, in response to a touch operation performed on the previous page control 204A, the electronic device 100 may display the user interface shown in FIG. 7B. Content in the text prompt box 204 shown in FIG. 7D may be a continuation of content in the text prompt box 204 shown in FIG. 7B. The stop voice broadcast control 204C may be used by the electronic device 100 to stop voice interaction with the user. For example, in response to a touch operation performed on the stop voice broadcast control 204C shown in FIG. 7D, the electronic device 100 may stop the voice broadcast of the story "Snow White".

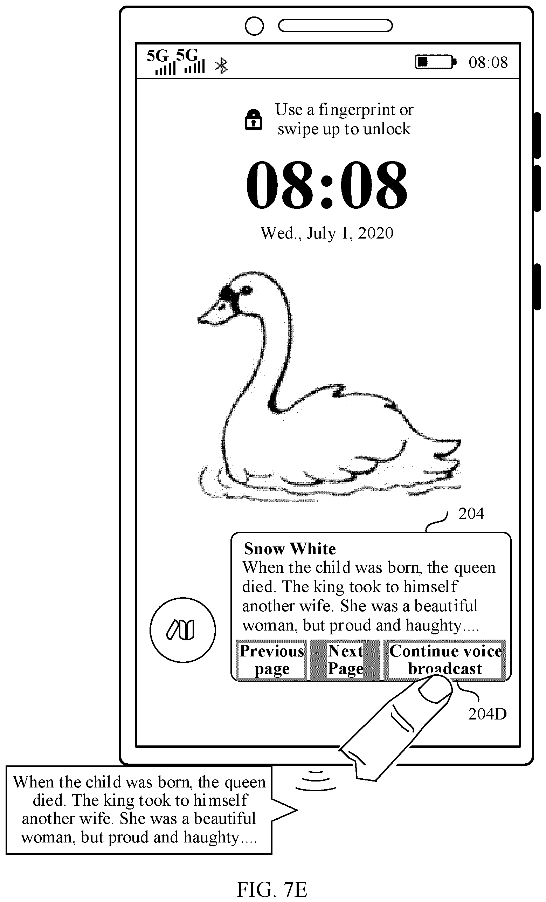

In addition, as shown in FIG. 7E, in response to the touch operation performed on the stop voice broadcast control 204C, the electronic device 100 may switch the stop voice broadcast control 204C to a continue voice broadcast control 204D. The continue voice broadcast control 204D may be used by the electronic device 100 to continue voice interaction with the user. For example, in response to a touch operation performed on the continue voice broadcast control 204D, the electronic device 100 may continue the voice broadcast from content broadcast when the voice broadcast is stopped. Alternatively, the electronic device 100 may give a voice broadcast of content currently displayed in the text prompt box 204.

The text prompt box 204 may further include more or fewer controls. This is not limited in embodiments of this application.

Optionally, in embodiments shown in FIG. 7A to FIG. 7E, the electronic device 100 may detect, by using the optical proximity sensor and the motion sensor, whether the user needs to watch the screen, so as to determine whether to turn on the screen.

When the wake-up word is recognized, the electronic device 100 may first enable the optical proximity sensor. When determining that the screen is blocked, the electronic device 100 may keep the screen in the screen-off state, run the voice assistant in the background, and perform voice interaction with the user. In addition, the optical proximity sensor may continuously work to detect whether the screen is blocked. If the electronic device 100 determines, at the first moment based on the optical proximity sensor, that the screen is not blocked, the electronic device 100 may disable the optical proximity sensor and enable the motion sensor. When no hand raising action is detected, the electronic device 100 may keep the screen in the screen-off state, and perform voice interaction with the user. When the hand raising action is detected based on the motion sensor, the electronic device 100 may turn on the screen, and interact with the user in the graphical interface manner and the voice manner. That is, the working time of the optical proximity sensor may start from recognition of the wake-up word and end at the first moment. The working time of the motion sensor may start from the first moment and end when the voice interaction ends. In this way, the electronic device 100 intelligently determines whether to turn on the screen based on whether the screen is blocked and the posture change of the electronic device 100, for example, whether the electronic device 100 detects a hand raising action, a flipping action, or a pocket pulling action, thereby reducing power consumption of the electronic device and avoiding an accidental touch. In addition, the electronic device 100 may turn on the screen when detecting that the user needs to watch the screen, without affecting viewing of a related user interface by the user.

Optionally, in embodiments shown in FIG. 7A to FIG. 7E, the electronic device 100 may detect, by using only the optical proximity sensor as the detection apparatus, whether the user needs to watch the screen, so as to determine whether to turn on the screen. That is, the working time of the optical proximity sensor may start from recognition of the wake-up word, and end when the voice interaction ends. When determining that the screen is not blocked, the electronic device 100 may turn on the screen, run the voice assistant, and interact with the user in the graphical interface manner and the voice manner. When determining that the screen is blocked, the electronic device 100 may turn off the screen, and perform voice interaction with the user. In this way, the screen of the electronic device 100 may be switched between the screen-off state and a screen-on state based on whether the screen is blocked. This not only does not affect the user to watch the screen and view a related user interface when needed, but also reduces power consumption of the electronic device and avoids an accidental touch.

Optionally, in embodiments shown in FIG. 7A to FIG. 7E, the electronic device 100 may detect, by using only the camera as the detection apparatus, whether the user needs to watch the screen, so as to determine whether to turn on the screen. That is, the working time of the camera may start from recognition of the wake-up word, and end when the voice interaction ends. When the face is detected, the electronic device 100 may turn on the screen, run the voice assistant, and interact with the user in the graphical interface manner and the voice manner. When no face is detected, the electronic device 100 may turn off the screen, and perform voice interaction with the user. In this way, the screen of the electronic device 100 may be switched between the screen-off state and the screen-on state based on whether the face can be detected. This not only does not affect the user to watch the screen and view the related user interface when needed, but also reduces power consumption of the electronic device and avoids an accidental touch.

Optionally, in embodiments shown in FIG. 7A to FIG. 7E, the electronic device 100 may detect, by using only the motion sensor as the detection apparatus, whether the user needs to watch the screen, so as to determine whether to turn on the screen. In other words, the working time of the motion sensor may start from recognition of the wake-up word, and end when the voice interaction ends. When no hand raising action is detected, the electronic device 100 may keep the screen in the screen-off state, and perform voice interaction with the user. When detecting the hand raising action, the electronic device 100 may turn on the screen, run the voice assistant, and interact with the user in the graphical interface manner and the voice manner. In this way, the electronic device 100 may intelligently determine whether to turn on the screen based on the posture change of the electronic device 100, for example, whether the electronic device 100 detects the hand raising action, a flipping action, or a pocket pulling action, thereby reducing power consumption of the electronic device and avoiding an accidental touch. In addition, the electronic device 100 may turn on the screen when detecting that the user needs to watch the screen, without affecting viewing of a related user interface by the user.

In the foregoing embodiment, in a process from a time when the wake-up word is recognized to a time when the voice interaction ends, the electronic device 100 may continuously detect, by using the detection apparatus, whether the user needs to watch the screen. In this way, when it is detected that the user does not need to watch the screen, the electronic device may interact with the user in the voice manner when the screen is in the screen-off state. When it is detected that the user needs to watch the screen, the electronic device turns on the screen, and interacts with the user in the graphical interface manner and the voice manner. In this way, the electronic device may intelligently determine whether to turn on the screen. The screen may be switched between the screen-off state and the screen-on state. In a scenario in which the user does not need to watch the screen, the screen of the electronic device is in the screen-off state, so that power consumption of the electronic device can be reduced, and an accidental touch can be avoided. In a scenario in which the user needs to watch the screen, the electronic device may display a corresponding user interface, and user experience is not affected.

**In some embodiments, the detection apparatus may perform detection starting from a time when the electronic device 100 recognizes the wake-up word of the voice assistant, and end the detection after the screen is turned on.**

Embodiments shown in FIG. 7A to FIG. 7C are still used for description.

As shown in FIG. 7A, the screen of the electronic device 100 is placed upward on the table. The screen of the electronic device 100 is in the screen-off state. The voice wake-up function of the electronic device 100 is enabled. When the wake-up word is recognized, the electronic device 100 may first enable the optical proximity sensor for detection, and when detecting that the screen is not blocked, disable the optical proximity sensor and enable the camera for detection. When determining, by using the camera, that no face is detected, the electronic device 100 may keep the screen in the screen-off state, run the voice assistant in the background, and interact with the user in the voice manner.

As shown in FIG. 7B, the face of the user is opposite to the screen of the electronic device 100. The electronic device 100 may detect the face based on an image collected by the camera. The electronic device 100 may turn on the screen, display the user interface shown in FIG. 7B, and interact with the user in the graphical interface manner and the voice manner. In addition, the electronic device 100 may disable the camera.

That is, when detecting that the user needs to watch the screen, the electronic device 100 may disable the detection apparatus, and does not detect whether the user needs to watch the screen in a subsequent phase. Then, after the electronic device 100 turns on the screen and displays the user interface shown in FIG. 7B, and before the voice interaction ends, if the face of the user is no longer opposite to the screen of the electronic device 100, for example, as shown in FIG. 7C, if the user puts down and leaves the electronic device 100, the screen of the electronic device 100 may still remain in the screen-on state.

**In some embodiments, the detection apparatus may perform detection starting from the time when the electronic device 100 recognizes the wake-up word of the voice assistant, and end the detection after one round of voice interaction with the user is completed.**

That the one round of voice interaction with the user is completed may be that the user says a voice instruction, and the electronic device 100 runs the voice assistant to reply to the voice instruction said by the user. For example, as shown in FIG. 2, that the user says the voice instruction "I want to send an SMS message to Zhang San" and the electronic device 100 may reply with the voice prompt "OK, please say SMS content" is one round of voice interaction. As shown in FIG. 3, that the user says the voice instruction "turn on an air conditioner" and the electronic device 100 replies "OK, the air conditioner is being turned on" is one round of voice interaction.

The embodiment shown in FIG. 2 is used for description.

As shown in FIG. 2, the electronic device 100 is placed in the pocket. The screen of the electronic device 100 is in the screen-off state. The voice wake-up function of the electronic device 100 is enabled. In a process from recognizing the wake-up word "Xiaoyi Xiaoyi" to running, by the electronic device 100, the voice assistant to reply "OK, please say SMS message content", the electronic device 100 may detect, by using the detection apparatus such as the optical proximity sensor and the camera, whether the user needs to watch the screen. When detecting that the user does not need to watch the screen, the electronic device 100 may keep the screen in the screen-off state, and interact with the user in the voice manner. When it is detected that the user needs to watch the screen, the electronic device 100 may turn on the screen, and interact with the user in the graphical interface and the voice manner. That is, the screen may be switched from the screen-off state to the screen-on state.

When the foregoing round of voice interaction is completed, the electronic device 100 may disable the detection apparatus. Whether the screen of the electronic device 100 is in the screen-off state or the screen-on state may be determined by a status of the screen when the electronic device 100 disables the detection apparatus. When the electronic device 100 disables the detection apparatus, the status of the screen is the screen-off state, and the electronic device 100 may keep the screen in the screen-off state, and interact with the user in the voice manner in a subsequent phase of the voice interaction process. When the electronic device 100 disables the detection apparatus, the status of the screen is the screen-on state, and the electronic device 100 may keep the screen in the screen-on state, and interact with the user in the graphical interface manner and the voice manner in the subsequent phase of the voice interaction process.

For a method in which the electronic device 100 detects, by using the detection apparatus, whether the user needs to watch the screen, refer to the descriptions in the foregoing embodiments. Details are not described herein again.

In some other embodiments, the detection apparatus may perform detection starting from the time when the electronic device 100 recognizes the wake-up word of the voice assistant, and end the detection after N rounds of voice interaction with the user are completed. N may be a positive integer greater than 1.

A detection time at which the electronic device detects, by using the detection apparatus, whether the user needs to watch the screen is not limited in embodiments of this application.

**In some embodiments, the electronic device 100 may detect, with reference to a detection result of the detection apparatus and an analysis result of analyzing whether the received voice instruction includes a specific keyword, whether the user needs to watch the screen.**

The specific keyword may include a first-type keyword and a second-type keyword. The first-type keyword may be a keyword related to a specific category of applications, and the specific category of applications generally interact with a user through a user interface. For example, video applications include Huawei Video and iQIYI, shopping applications include Taobao and Jingdong, and navigation applications include Baidu Maps and Google Maps. The second-type keyword may be a keyword related to specific actions, and the specific actions may be actions indicating that the user needs to watch the screen, for example, view and display.

In some application scenarios, after recognizing the wake-up word, the electronic device 100 detects, based on the detection result of the detection apparatus, that the user does not need to watch the screen, and the electronic device 100 may keep the screen in the screen-off state, and perform voice interaction with the user. However, when the received voice instruction relates to displaying a user interface, and the electronic device 100 cannot describe, for the user in a voice broadcast form, a user interface that needs to be displayed, for example, the voice instruction is "View a gallery" or "Play a video", the electronic device 100 may turn on the screen to display the user interface related to the voice instruction.

Based on detecting, by using the detection result of the detection apparatus, that the user does not need to watch the screen, the electronic device 100 may further recognize whether the voice instruction includes the first-type keyword and/or the second-type keyword, to determine whether to turn on the screen.

In a possible implementation, the electronic device 100 may first recognize whether the voice instruction includes the first-type keyword. If it is determined that the voice instruction includes the first-type keyword, the electronic device 100 may turn on the screen to display the user interface related to the voice instruction. In this way, the electronic device 100 may interact with the user in the graphical interface manner and the voice manner. If it is determined that the voice instruction does not include the first-type keyword, the electronic device 100 may further recognize whether the voice instruction includes the second-type keyword. If it is determined that the voice instruction includes the second-type keyword, the electronic device 100 may turn on the screen to display the user interface related to the voice instruction. In this way, the electronic device 100 may interact with the user in the graphical interface manner and the voice manner. If it is determined that the voice instruction does not include the first-type keyword and the second-type keyword, the electronic device 100 may keep the screen in the screen-off state, and perform voice interaction with the user.

In another possible implementation, the electronic device 100 may first recognize whether the voice instruction includes the second-type keyword. If it is determined that the voice instruction does not include the second-type keyword, the electronic device 100 may further recognize whether the voice instruction includes the first-type keyword, to detect whether the user needs to watch the screen, so as to intelligently determine whether to turn on the screen.

For a method for recognizing the voice instruction by the electronic device 100, refer to the foregoing embodiments. Details are not described herein again.

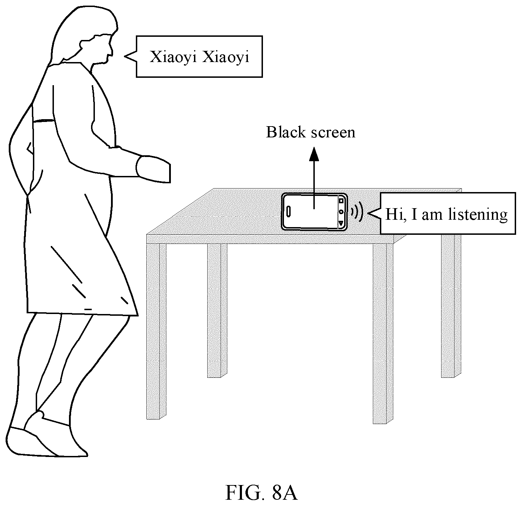

FIG. 8A to FIG. 8D each show an example of an embodiment in which the electronic device 100 detects, with reference to a detection result of a detection apparatus and an analysis result of analyzing whether a received voice instruction includes a specific keyword, whether a user needs to watch a screen.

As shown in FIG. 8A, the screen of the electronic device 100 is placed upward on a table. The screen of the electronic device 100 is in a screen-off state, and a voice wake-up function is enabled. The user says a wake-up word "Xiaoyi Xiaoyi" near the electronic device 100. A microphone in the electronic device 100 may collect a voice input near the electronic device 100. A voice wake-up module in the electronic device 100 may obtain the voice input collected by the microphone, and recognize that the voice input includes the wake-up word. Then, the electronic device 100 may start the detection apparatus to detect whether the user needs to watch the screen. The electronic device 100 may detect, by using one or more of an optical proximity sensor, a camera, and a motion sensor, whether the user needs to watch the screen. For a specific detection method, refer to the foregoing embodiments. Details are not described herein again.

When it is detected, based on the detection apparatus, that the user does not need to watch the screen, the electronic device 100 may keep the screen in the screen-off state, run a voice assistant in a background, and perform voice interaction with the user. For example, the electronic device 100 may keep the screen in the screen-off state, and prompt the user to say a voice instruction through a voice prompt "Hi, I am listening" by using a speaker.

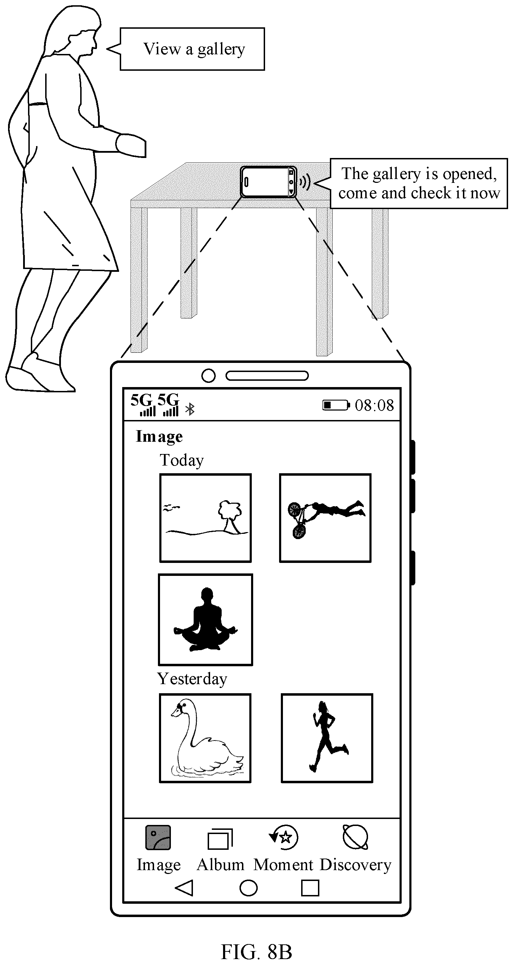

As shown in FIG. 8B, after the wake-up word is recognized, the microphone in the electronic device 100 may collect a voice input near the electronic device 100. The electronic device 100 may recognize a voice instruction from the voice input. For example, the user says a voice instruction "View a gallery" near the electronic device 100. The electronic device 100 may recognize that the voice instruction includes a first-type keyword "gallery". The electronic device 100 may execute the voice instruction. Specifically, the electronic device 100 may invoke a gallery application, and display a user interface of the gallery application shown in FIG. 8B. In addition, the electronic device 100 may further give a voice prompt "The gallery is opened. Please check it." by using the speaker.

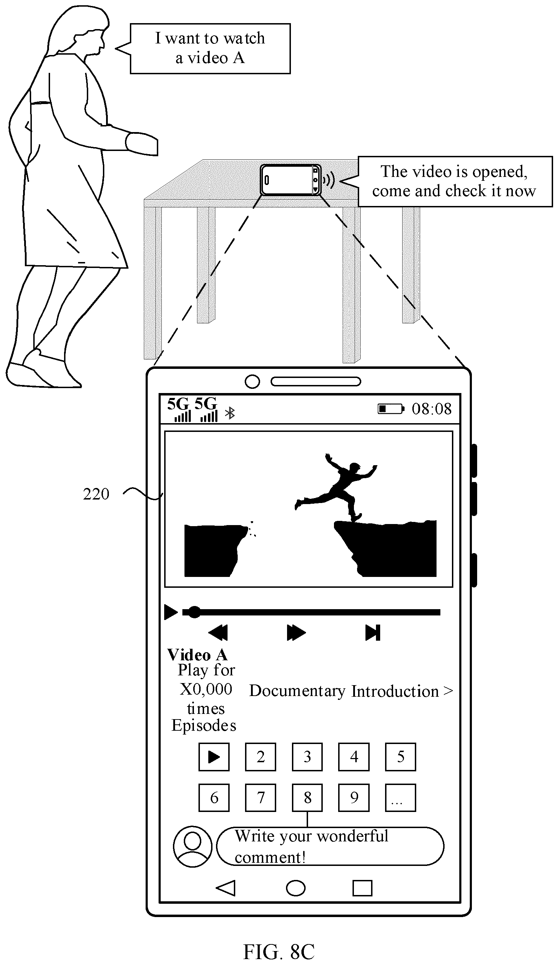

As shown in FIG. 8C, after the wake-up word is recognized, the microphone in the electronic device 100 may collect a voice input near the electronic device 100. The electronic device 100 may recognize a voice instruction from the voice input. For example, the user says a voice instruction "I want to watch a video A" near the electronic device 100. The electronic device 100 may first recognize whether the voice instruction includes the first-type keyword. The voice instruction does not include the first-type keyword. When determining that the voice instruction does not include the first-type keyword, the electronic device 100 may further recognize whether the voice instruction includes a second-type keyword. The voice instruction includes the second-type keyword "watch". When determining that the voice instruction includes the second-type keyword, the electronic device 100 may execute the voice instruction. Specifically, the electronic device 100 may invoke a Huawei video application, to display a user interface of the Huawei video application shown in FIG. 8C. The user interface may include the video A indicated in the voice instruction. In addition, the electronic device 100 may further give a voice prompt "Opened for you, come and check it" by using the speaker.

It can be learned from the foregoing embodiments that when it is detected, based on the detection apparatus, that the user does not need to watch the screen, the electronic device 100 may first keep the screen in the screen-off state, and perform voice interaction with the user. When receiving the voice instruction, the electronic device 100 may further detect, based on whether the voice instruction includes the first-type keyword and/or the second-type keyword, whether the user needs to watch the screen. In some scenarios in which the user wants to watch the screen but has not yet watched the screen, for example, the electronic device 100 is placed on a table, and the user goes to the electronic device 100 to prepare to watch the screen while saying the wake-up word and the voice instruction "View a gallery", the electronic device 100 may turn on the screen based on the first-type keyword and/or the second-type keyword included in the voice instruction, to display a user interface related to the voice instruction. In this way, the electronic device 100 may more accurately detect whether the user needs to watch the screen.

In some embodiments, the screen of the electronic device 100 is in the screen-off state and is in a screen-locked state. Before displaying the user interface related to the voice instruction, the electronic device 100 prompts the user to unlock the electronic device 100.

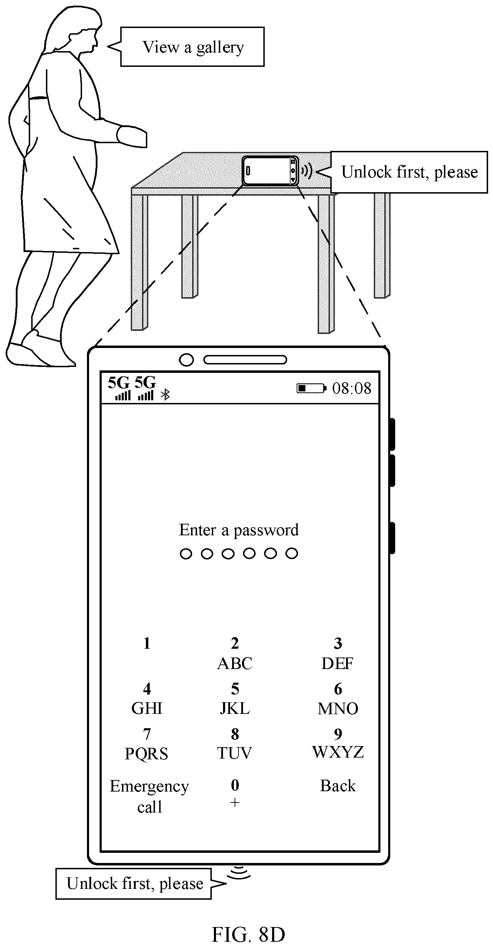

As shown in FIG. 8A and FIG. 8D, the user says the wake-up word "Xiaoyi Xiaoyi" and the voice instruction "View a gallery" near the electronic device 100. After recognizing the wake-up word, the electronic device 100 may detect, based on the detection apparatus, that the user does not need to watch the screen. The microphone in the electronic device 100 may collect a voice input near the electronic device 100. The electronic device 100 may recognize a voice instruction from the voice input. The voice instruction includes the first-type keyword. The electronic device 100 may display an unlocking interface shown in FIG. 8D, and give a voice prompt "Please unlock first" to the user by using the speaker to unlock the electronic device 100. For example, the user may enter an unlocking password in the unlocking interface shown in FIG. 8D. The electronic device 100 may receive the unlocking password and match the unlocking password with a stored unlocking password. If the received unlocking password matches the stored unlocking password, the electronic device 100 may invoke the gallery application, and display the user interface of the gallery application shown in FIG. 8B.

The foregoing unlocking manner is not limited in this embodiment of this application. For example, the electronic device 100 may further perform unlocking based on a voiceprint feature of the received voice input. Alternatively, the electronic device 100 may perform unlocking based on facial recognition. For the foregoing unlocking manner, refer to an implementation in the conventional technology.

In some embodiments, the electronic device 100 may analyze only whether the received voice instruction includes a specific keyword, to determine whether the user needs to watch the screen.

For example, when determining that the received voice instruction includes the first-type keyword and/or the second-type keyword, the electronic device 100 may turn on the screen, and interact with the user in a graphical interface manner and a voice manner. When determining that the received voice instruction does not include the first-type keyword and the second-type keyword, the electronic device 100 may keep the screen in the screen-off state, and interact with the user only in the voice manner.

For an implementation in which the electronic device 100 determines, based on whether the voice instruction includes the specific keyword, whether the user needs to watch the screen, refer to the foregoing embodiments. Details are not described herein again.

In some embodiments, the electronic device 100 may be a large-screen device such as a smart television, or may be a smart sound box with a screen. Users can use these devices without watching screens of these devices. For example, when a user plays music and controls a smart home device by using a smart television or a smart sound box with a screen, the user may not need to watch the screen.

Currently, when the user uses the electronic device 100, for example, enables the electronic device 100 to play music by using a remote control or a voice instruction, the electronic device 100 may turn on the screen. To use the electronic device 100 when the screen of the electronic device 100 is kept in an off state, the user needs to turn off the screen of the electronic device 100 by using the remote control or the voice instruction.

The foregoing user operation of controlling the screen of the electronic device 100 to turn off is complex. When the screen is in the screen-off state, the electronic device 100 cannot intelligently determine, based on whether the user needs to watch the screen, whether to turn on the screen.

**The following describes another voice interaction method provided in an embodiment of this application.**

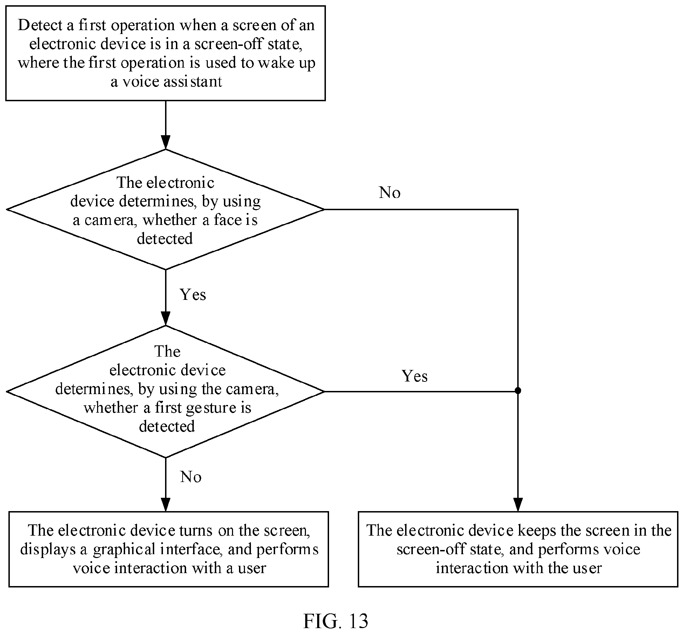

For the voice interaction method, refer to a method flowchart shown in FIG. 13.

The electronic device 100 whose screen is in a screen-off state may start a voice assistant and a detection apparatus in response to a first operation. The electronic device 100 may use a camera as the detection apparatus to detect whether a user needs to watch the screen, so as to intelligently determine whether to turn on the screen.

The first operation may be a user operation performed on a physical button on the electronic device 100, or a user operation performed on a button on a remote control configured to control the electronic device 100. For example, the electronic device 100 is a smart television. The first operation may be a user operation performed on a power button on the smart television, or a user operation performed on a power-on/off button on the remote control of the smart television.

If the electronic device 100 enables a voice wake-up function, the first operation may further be that the user says a preset wake-up word (for example, "Xiaoyi Xiaoyi").

The following specifically describes an example in which the first operation is the user saying the preset wake-up word.

The screen of the electronic device 100 is in the screen-off state. The voice wake-up function of the electronic device 100 is enabled. When the wake-up word is recognized from a voice input collected by a microphone, the electronic device 100 may enable the camera to determine whether a face is detected.

If it is determined that an image that does not include the face exists in a plurality of frames of images collected by the camera within a preset time period, the electronic device 100 may determine that no face is detected. That the electronic device 100 does not detect a face may indicate that the face of the user is not opposite to the screen of the electronic device 100, that is, the user does not need to watch the screen.

When determining that no face is detected, the electronic device 100 may keep the screen in the screen-off state, and perform voice interaction with the user. For example, when receiving a voice instruction of "Play music", the electronic device 100 may keep the screen in the screen-off state, and play music. The voice instruction may also be, for example, "Make a call", "Send an SMS message", "Play music", or "Control a smart home device".

If it is determined that all the plurality of frames of images collected by the camera within the preset time period include a face, the electronic device 100 may determine that the face is detected. For a device such as a smart television or a smart speaker with a screen, a face of a user opposite to the screen does not necessarily indicate that the user needs to watch the screen. For example, in a scenario in which the user sits in front of the smart television and starts a voice assistant of the smart television by using a wake-up word, to play music, the user may not watch a screen of the smart television.

When determining that the face is detected, the electronic device 100 may determine whether the image collected by the camera includes a first gesture, to detect whether the user needs to watch the screen.

The first gesture may be used to indicate that the user does not need to watch the screen. For example, when the user sits in front of the smart television, and starts the voice assistant of the smart television and does not need to watch the screen, the user may make the first gesture when saying the wake-up word.

The first gesture may be a gesture of clenching a fist, a gesture of expanding a palm, or the like. The first gesture is not limited in embodiments of this application.

It may be understood that detecting a face does not necessarily indicate that the user needs to watch the screen. However, when the face is detected, the electronic device 100 may further recognize the first gesture in the image collected by the camera. The first gesture may indicate that the user does not need to view the screen.

When the face is detected and the first gesture is detected, the electronic device 100 may keep the screen in the screen-off state, and perform voice interaction with the user.

When the face is detected and no first gesture is detected, the electronic device 100 may turn on the screen, display a graphical interface, and perform voice interaction with the user. In this way, the electronic device 100 may interact with the user in a graphical interface manner and a voice manner.

The graphical interface may be a user interface of the voice assistant. Alternatively, when the voice instruction involves displaying a user interface of a third application, for example, the voice instruction is "Play a video", the graphical interface may be the user interface of the third application.

It can be learned from the foregoing voice interaction method that the electronic device may determine, based on the image collected by the camera, whether the face is detected and whether the first gesture is detected, so as to detect whether the user needs to watch the screen. The electronic device 100 may determine, based on whether the camera needs to watch the screen, whether to turn on the screen when the voice assistant is started in the screen-off state. When it is detected that the user does not need to watch the screen, the electronic device may keep the screen in the screen-off state, and perform voice interaction with the user. In this way, in a scenario in which the user uses the electronic device 100 and does not watch the screen of the electronic device 100, the user does not need to perform a corresponding operation to turn off the screen after the electronic device 100 turns on the screen, thereby simplifying an operation of using the electronic device 100 as a sound box by the user.

The following specifically describes the voice interaction method with reference to an application scenario.

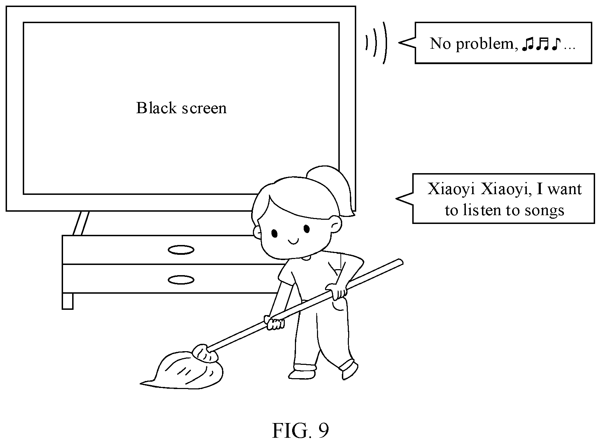

**FIG. 9** **is an example of a schematic diagram of a scenario in which the electronic device 100 keeps the screen in the screen-off state to perform voice interaction with the user.**

As shown in FIG. 9, the electronic device 100 may be a smart television. A screen of the smart television is in a screen-off state, and a voice wake-up function is enabled. A microphone of the smart television may collect a voice input near the smart television in real time, and send the voice input to a voice wake-up module. The voice wake-up module recognizes whether the voice input includes a preset wake-up word. In this way, the user may start the voice assistant by saying the preset wake-up word.

When the user says "Xiaoyi Xiaoyi, I want to listen to songs" near the smart television, the voice wake-up module in the smart television can recognize the wake-up word "Xiaoyi Xiaoyi". Further, the smart television may start the detection apparatus to detect whether the user needs to watch the screen. As shown in FIG. 9, the face of the user is not opposite to the screen of the smart television, or the face of the user flashes in front of the smart television. When the camera is started for detection, the smart television may determine that an image that does not include the face exists in the plurality of frames of images collected by the camera within the preset time period. The smart television may keep the screen in the screen-off state, run the voice assistant in the background, and perform voice interaction with the user. The smart television may recognize the voice instruction "I want to listen to songs", and perform an operation corresponding to the voice instruction. For example, the smart television may invoke a music application to play music when keeping the screen in the screen-off state.

In some embodiments provided in this application, the camera may be a low power consumption camera, for example, an infrared camera. The camera may be in a working state in real time. When the first operation is detected, the electronic device 100 may obtain data collected by the camera, to determine whether the user needs to watch the screen. Further, the electronic device 100 may determine whether to turn on the screen when the voice assistant is enabled.

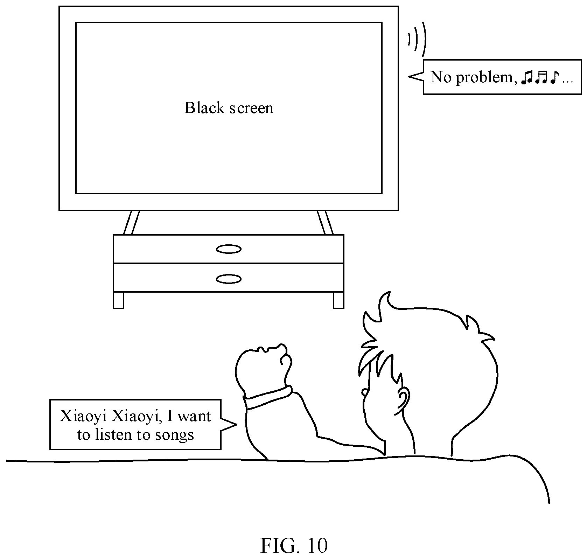

**FIG. 10** **is an example of a schematic diagram of another scenario in which the electronic device 100 keeps the screen in the screen-off state to perform voice interaction with the user.**

As shown in FIG. 10, the electronic device 100 may be a smart television. A screen of the smart television is in a screen-off state, and a voice wake-up function is enabled. A microphone of the smart television may collect a voice input near the smart television in real time, and send the voice input to a voice wake-up module. The voice wake-up module recognizes whether the voice input includes a preset wake-up word. In this way, the user may start the voice assistant by saying the preset wake-up word.

When the user says "Xiaoyi Xiaoyi, I want to listen to songs" near the smart television, the voice wake-up module in the smart television can recognize the wake-up word "Xiaoyi Xiaoyi". Further, the smart television may start the detection apparatus to detect whether the user needs to watch the screen. As shown in FIG. 10, the face of the user is opposite to the screen of the smart television, and the user performs a gesture of clenching a fist. The gesture of clenching a fist may be the first gesture in the foregoing embodiments, and may be used to indicate that the user does not need to watch the screen of the electronic device 100. When the camera is enabled for detection, the smart television may determine that the plurality of frames of images collected by the camera within the preset time period include the face, and the image collected by the camera includes the gesture of clenching a fist. The smart television may keep the screen in the screen-off state, run the voice assistant in the background, and perform voice interaction with the user. The smart television may recognize the voice instruction "I want to listen to songs", and perform an operation corresponding to the voice instruction. For example, the smart television may invoke a music application to play music when keeping the screen in the screen-off state.

In the scenarios shown in FIG. 9 and FIG. 10, when the electronic device starts the voice assistant in the screen-off state, the electronic device may not directly turn on the screen, but first detect, by using the image collected by the camera, whether the user needs to watch the screen, so as to determine whether to turn on the screen. In a scenario in which the user expects to use the electronic device 100 as a sound box, the user does not need to perform a corresponding operation to turn off the screen after the electronic device 100 turns on the screen. In this way, user operations can be simplified.

**The following describes another schematic diagram of a structure of the electronic device 100 with reference to the voice interaction method provided in embodiments of this application.**

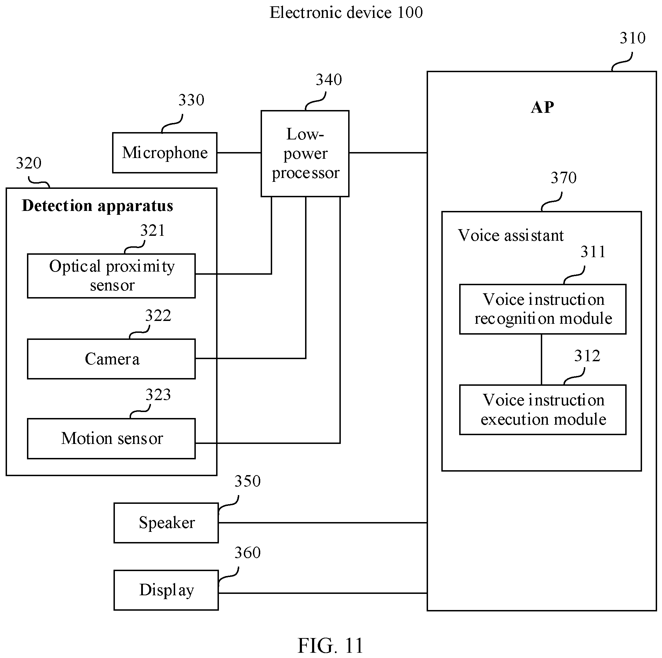

As shown in FIG. 11, the electronic device 100 may include an AP 310, a detection apparatus 320, a microphone 330, a low-power processor 340, a loudspeaker 350, and a display 360. The AP 310 may include a voice assistant 370. The voice assistant 370 may include a voice instruction recognition module 311 and a voice instruction execution module 312. The detection apparatus 320 may include an optical proximity sensor 321, a camera 322, and a motion sensor 323.

The AP 310 may be the processor 110 in FIG. 1, or one or more processors of a plurality of processors included in the processor 110. The microphone 330 may be the microphone 170C in FIG. 1. The speaker 350 may be the speaker 170A in FIG. 1. The display 360 may be one or more of the displays 194 in FIG. 1. The optical proximity sensor 321 may be the optical proximity sensor 180G in FIG. 1. The camera 322 may be one or more of the cameras 193 in FIG. 1. The motion sensor 323 may include the acceleration sensor 180E and the gyroscope sensor 180B in FIG. 1.

The speaker 350, the display 360, and the detection apparatus 320 may be connected to the AP 310. The microphone 330, the optical proximity sensor 321, the camera 322, and the motion sensor 323 may all be connected to the AP 310 by using the low-power processor 340. A voice wake-up module may be integrated into the low-power processor 340, and may be configured to wake up the AP 310 when a wake-up word is recognized.

When the screen of the electronic device 100 is in the screen-off state and the voice wake-up function is enabled, the microphone 330 and the low-power processor 340 may be in a working state in real time, one or more of the optical proximity sensor 321, the camera 322, and the motion sensor 323 may be in the working state in real time, the AP 310 may be in a sleep state, and the display 360 is turned off. The microphone may collect a voice input near the electronic device 100 in real time, and send the voice input to the low-power processor 340. The low-power processor 340 may be configured to recognize whether the voice input includes a preset wake-up word (or referred to as a wake-up instruction, for example, "Xiaoyi Xiaoyi"). When the preset wake-up word is recognized, the low-power processor 340 may wake up the AP 310.

In a possible implementation, after being woken up by the low-power processor 340, the AP 310 may first obtain a detection result of the detection apparatus 320 by using the low-power processor 340, and then start the voice assistant 370 after obtaining the detection result. The starting the voice assistant 370 may include starting the voice instruction recognition module 311 and the voice instruction execution module 312. The AP 310 may interact with the user through the loudspeaker 350 and/or the display 360 based on the detection result.

If it is detected, based on the detection apparatus 320, that the user does not need to watch the screen, the voice instruction execution module 311 in the AP 310 may execute a recognized voice instruction, and perform voice broadcasting for the user through the loudspeaker 350. The display 360 keeps in the screen-off state. For example, the voice input collected by the microphone 330 includes a voice instruction "Query weather of a current day". The voice instruction recognition module 311 may obtain the voice input, and recognize a voice instruction in the voice input. The voice instruction execution module 312 may execute an operation corresponding to the voice instruction. Specifically, the voice instruction execution module 312 may invoke a weather application to query the weather (such as temperature and air quality) of the current day, and perform voice broadcast on a result of querying the weather of the current day through the loudspeaker.

If it is detected, based on the detection apparatus 320, that the user needs to watch the screen, the voice instruction recognition module 311 in the AP 310 may execute the recognized voice instruction, perform voice broadcasting for the user through the loudspeaker 350, and display, through the display 360, a user interface related to the voice instruction. For example, the voice input collected by the microphone 330 includes the voice instruction "Query weather of a current day". The voice instruction recognition module 311 may obtain the voice input, and recognize the voice instruction in the voice input. The voice instruction execution module 312 may execute the operation corresponding to the voice instruction. Specifically, the voice instruction execution module 312 may invoke the weather application to query the weather (such as temperature and air quality) of the current day, perform voice broadcast on the result of querying the weather of the current day through the loudspeaker, and display the user interface 210 shown in FIG. 5B-1 and FIG. 5B-2.

In some embodiments provided in this application, the camera 322 may be a low-power camera, for example, an infrared camera.

One or more of the optical proximity sensor 321, the camera 322, and the motion sensor are in the working state in real time, and transmit collected data to the low-power processor 340. When the low-power processor 340 recognizes that the voice input received by the microphone 330 includes the wake-up word, the low-power processor 340 may wake up the AP 310. Then, the AP 310 may obtain, from the low-power processor 340, the data collected by the detection apparatus 320, and determine whether the user watches the display 360.

Alternatively, the optical proximity sensor 321, the camera 322, and the motion sensor 323 may be connected to the AP 310. When the low-power processor 340 recognizes that the voice input received by the microphone 330 includes the wake-up word, the low-power processor 340 may wake up the AP 310. Then, the AP 310 may enable one or more of the optical proximity sensor 321, the camera 322, and the motion sensor 323. Further, the AP 310 may determine, based on the data collected by the detection apparatus 320, whether the user watches the display 360.

For a method in which the AP 310 detects, by using the detection apparatus 320, whether the user needs to watch the screen, refer to the foregoing embodiments. Details are not described herein again.

In another possible implementation, in response to a user operation that is performed on a preset physical button and that is used to start the voice assistant, the electronic device 100 whose screen is in the screen-off state may wake up the AP 310. The preset physical button may be one or more of the following buttons on the electronic device 100: a power button, a volume up button, and a volume down button. For example, the foregoing user operation used to start the voice assistant may be a touch and hold operation performed on the power button, and a touch and hold time is, for example, one second or two seconds. This is not limited in embodiments of this application.

In other words, the user may start the voice assistant by touching and holding the power button.

When the AP 310 is woken up by the user operation used to start the voice assistant, the AP 310 may perform detection by using the detection apparatus 320 based on the foregoing embodiments, and start the voice instruction recognition module 311 and the voice instruction execution module 312 to execute the voice instruction of the user. Details are not described herein again.

In addition to the components shown in FIG. 11, the electronic device 100 may include more or fewer components.

It can be learned from the electronic device 100 shown in FIG. 11 that, when starting the voice assistant, the electronic device 100 may detect, by using the detection apparatus, whether the user needs to watch the screen, so as to intelligently determine whether to turn on the screen. If it is detected that the user does not need to watch the screen, the electronic device 100 may run the voice assistant in the background, and perform voice interaction with the user. In this way, power consumption of the electronic device can be reduced, and an accidental touch can be avoided. If it is detected that the user needs to watch the screen, the electronic device 100 may turn on the screen, and interact with the user in a graphical interface manner and a voice manner.

In some embodiments provided in this application, the electronic device may detect a first operation of the user when the screen is in the screen-off state. The first operation may be used to start the voice assistant. The first operation may be a user operation performed by the user to say the wake-up word (for example, "Xiaoyi Xiaoyi") in the foregoing embodiments. Alternatively, the first operation may be a user operation to press and hold a first button by the user in the foregoing embodiments. The first button may include one or more of the following: a power button, a volume up button, and a volume down button.

In some embodiments provided in this application, in a first case, the electronic device starts the voice assistant while keeping the screen in the screen-off state, and enables the voice assistant to interact with the user in a first manner. The first case may be a case in which the user does not watch the screen of the electronic device. For example, when the user places the screen of the electronic device downward on a table or places the screen in the pocket as shown in FIG. 2, a first sensor of the electronic device may detect that a blockage exists within a preset distance from the screen. Therefore, the electronic device may determine that the user does not watch the screen of the electronic device. As shown in FIG. 3, when the user places the screen of the electronic device upward on the table, but does not make the face face opposite to the screen of the electronic device, the first sensor of the electronic device may detect that no object exists within the preset distance from the screen, and a second sensor does not detect the face. Therefore, the electronic device may determine that the user does not watch the screen of the electronic device. The first manner may be interacting with the user only through a voice.

In some embodiments provided in this application, in a second case, the electronic device may turn on the screen, start the voice assistant, and enable the voice assistant to interact with the user in a second manner. The second manner includes interacting with the user through a graphical interface. The second case may be a case in which the user watches the screen of the electronic device. For example, when the user places the screen of the electronic device upward on the table, and makes the face face opposite to the screen of the electronic device, the first sensor of the electronic device may detect that no blockage exists within the preset distance from the screen, and the second sensor detects the face. Therefore, the electronic device may determine that the user watches the screen of the electronic device. As shown in FIG. 5B-1 and FIG. 5B-2, when the user performs a hand raising action, for example, changes the electronic device with the screen facing upward from a horizontally placed posture to a tilted or vertically placed posture, the screen of the electronic device after posture adjustment may be opposite to the face, and the electronic device may detect, by using a third sensor, that the posture of the electronic device is switched from a first posture to a second posture. Therefore, the electronic device may determine that the user watches the screen of the electronic device. The first posture may be, for example, a posture in which the screen of the electronic device is horizontally placed upward. The second posture may be, for example, a posture in which the screen is placed upward and tilted.

In some embodiments provided in this application, that the electronic device enables the voice assistant to interact with the user in a first manner may be specifically that the electronic device enables the voice assistant to run only a first program. The first program may be a program used to perform voice interaction with the user. When the voice assistant runs only the first program, the electronic device may interact with the user only in the voice manner. Further, when it is detected that the user needs to watch the screen, the electronic device may run a second program. The second program may be a program used to obtain a graphical interface for interacting with the user. To be specific, in a process in which the voice assistant interacts with the user, the electronic device may enable the voice assistant to run a program related to drawing the graphical interface when the screen needs to be turned on.

That the electronic device enables the voice assistant to interact with the user in a first manner may further be specifically that the electronic device enables the voice assistant to run the second program and the first program. To be specific, when it is detected that the user does not need to watch the screen, the electronic device may still enable the voice assistant to run the program related to drawing the graphical interface. However, the electronic device does not turn on the screen for display. Further, when it is detected that the user needs to watch the screen, the electronic device may directly display, on the screen, the graphical interface obtained by running the second program. In this way, the electronic device can reduce a delay in drawing the graphical interface.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A voice interaction method, comprising:
detecting, by an electronic device, a first operation of a user when a screen is in a screen-off state, wherein the first operation is used to start a voice assistant; and
in a first case, starting, by the electronic device, the voice assistant when the screen is kept in the screen-off state, and enabling the voice assistant to interact with the user in a first manner, wherein the first manner is to interact with the user only through a voice; and the first case comprises any one of the following:
a first sensor detects that no blockage exists within a preset distance from the screen, and a second sensor does not detect a face;
the second sensor does not detect a face; or
the first sensor detects that a blockage exists within the preset distance from the screen.

2. The method according to claim 1, further comprising:
in a second case, turning on, by the electronic device, the screen, starting the voice assistant, and enabling the voice assistant to interact with the user in a second manner, wherein the second manner comprises interacting with the user through a graphical interface; and the second case comprises any one of the following:
the first sensor detects that no blockage exists within the preset distance from the screen, and the second sensor detects a face;
the first sensor detects that no blockage exists within the preset distance from the screen, and a third sensor detects that a posture of the electronic device is switched from a first posture to a second posture;
the second sensor detects a face; or
the third sensor detects that the posture of the electronic device is switched from the first posture to the second posture.

3. The method according to claim 1, further comprising:
in a process in which the voice assistant interacts with the user in the first manner, if the electronic device detects a second case, turning on, by the electronic device, the screen, and enabling the voice assistant to interact with the user in a second manner, wherein the second manner comprises interacting with the user through a graphical interface, and the second case comprises any one of the following:
the first sensor detects that no blockage exists within the preset distance from the screen, and the second sensor detects a face;
the first sensor detects that no blockage exists within the preset distance from the screen, and a third sensor detects that a posture of the electronic device is switched from a first posture to a second posture;
the second sensor detects a face; or
the third sensor detects that the posture of the electronic device is switched from the first posture to the second posture.

4. The method according to claim 1, wherein the method further comprises:
in a process in which the voice assistant interacts with the user in the first manner, receiving, by the electronic device, a first voice input by the user, and recognizing the first voice; and
when the electronic device recognizes that the first voice meets a first condition, turning on, by the electronic device, the screen, and enabling the voice assistant to interact with the user in a second manner, wherein the second manner comprises interacting with the user through a graphical interface, wherein
that the first voice meets a first condition comprises: the first voice comprises one or more of the following: a first-type keyword and a second-type keyword, wherein the first-type keyword comprises one or more of the following types of application names: a video type, a shopping type, and a navigation type; and the second-type keyword comprises one or more of the following verbs: view and display.

5. The method according to any one of claims 2 to 4, further comprising:
detecting, by the electronic device, the first case in a process in which the voice assistant interacts with the user in the second manner; and
turning off, by the electronic device, the screen, and enabling the voice assistant to interact with the user in the first manner.

6. The method according to any one of claims 1 to 4, comprising:
detecting, by the electronic device, the first case when detecting the first operation;
detecting, by the electronic device, the first case at a first time after the first operation is detected, wherein an interval between the first time and a time at which the electronic device detects the first operation is less than first duration; or
detecting, by the electronic device, the first case at a second time before the first operation is detected, wherein an interval between the second time and the time at which the electronic device detects the first operation is less than second duration.

7. The method according to claim 2, comprising:
detecting, by the electronic device, the second case when detecting the first operation;
detecting, by the electronic device, the second case at a first time after the first operation is detected, wherein an interval between the first time and a time at which the electronic device detects the first operation is less than first duration; or
detecting, by the electronic device, the second case at a second time before the first operation is detected, wherein an interval between the second time and the time at which the electronic device detects the first operation is less than second duration.

8. The method according to any one of claims 1 to 7, wherein the enabling the voice assistant to interact with the user in a first manner specifically comprises:
enabling, by the electronic device, the voice assistant to run only a first program; or
enabling, by the electronic device, the voice assistant to run a second program and the first program, wherein
the first program is a program used to perform voice interaction with the user, and the second program is a program used to obtain a graphical interface for interaction with the user.

9. The method according to any one of claims 2 to 5 or 7, wherein the second manner is to interact with the user through a graphical interface and a voice.

10. The method according to any one of claims 1 to 9, wherein the detecting, by an electronic device, a first operation when a screen is in a screen-off state specifically comprises:
receiving, by the electronic device when the screen is in the screen-off state, a second voice input by the user, wherein the second voice comprises a wake-up word used to start the voice assistant.

11. The method according to any one of claims 1 to 9, wherein the detecting, by an electronic device, a first operation when a screen is in a screen-off state specifically comprises:
detecting, by the electronic device when the screen is in the screen-off state, a touch-and-hold operation performed on a first button, wherein the first button comprises one or more of the following: a power button, a volume up button, and a volume down button.

12. The method according to any one of claims 2 to 11, wherein the method further comprises one or more of the following:
the first sensor comprises one or more of the following: an optical proximity sensor, an infrared sensor, and a radar sensor;
the second sensor comprises a camera; and
the third sensor comprises a motion sensor, wherein the motion sensor comprises one or more of the following: an acceleration sensor and a gyroscope sensor.

13. An electronic device, comprising: a screen, an input apparatus, a detection apparatus, and at least one processor, wherein the detection apparatus comprises one or more of the following: a first sensor and a second sensor, wherein
the input apparatus is configured to detect a first operation of a user when the screen is in a screen-off state, wherein the first operation is used to start a voice assistant;
the detection apparatus is configured to: when the input apparatus detects the first operation of the user, detect whether a first case exists, wherein the first case comprises any one of the following:
the first sensor detects that no blockage exists within a preset distance from the screen, and the second sensor does not detect a face;
the second sensor does not detect a face; or
the first sensor detects that a blockage exists within the preset distance from the screen; and
the processor is configured to: when the detection apparatus detects the first case, start the voice assistant when the screen is kept in the screen-off state, and enable the voice assistant to interact with the user in a first manner, wherein the first manner is to interact with the user only through a voice.

14. The electronic device according to claim 13, wherein the detection apparatus further comprises a third sensor;
the detection apparatus is further configured to detect whether a second case exists, wherein the second case comprises any one of the following:
the first sensor detects that no blockage exists within the preset distance from the screen, and the second sensor detects a face;
the first sensor detects that no blockage exists within the preset distance from the screen, and the third sensor detects that a posture of the electronic device is switched from a first posture to a second posture;
the second sensor detects a face; or
the third sensor detects that the posture of the electronic device is switched from the first posture to the second posture; and
the processor is further configured to: when the detection apparatus detects the second case, turn on the screen, start the voice assistant, and enable the voice assistant to interact with the user in a second manner, wherein the second manner comprises interacting with the user through a graphical interface.

15. The electronic device according to claim 13, wherein the detection apparatus further comprises a third sensor;
the detection apparatus is further configured to detect, in a process in which the voice assistant interacts with the user in the first manner, whether a second case exists, wherein the second case comprises any one of the following:
the first sensor detects that no blockage exists within the preset distance from the screen, and the second sensor detects a face;
the first sensor detects that no blockage exists within the preset distance from the screen, and the third sensor detects that a posture of the electronic device is switched from a first posture to a second posture;
the second sensor detects a face; or
the third sensor detects that the posture of the electronic device is switched from the first posture to the second posture; and
the processor is further configured to: when the detection apparatus detects the second case, turn on the screen, and enable the voice assistant to interact with the user in a second manner, wherein the second manner comprises interacting with the user through a graphical interface.

16. The electronic device according to claim 13, wherein
the input apparatus is further configured to receive, in a process in which the voice assistant interacts with the user in the first manner, a first voice input by the user; and
the processor is further configured to: recognize the first voice, and when recognizing that the first voice meets a first condition, turn on the screen, and enable the voice assistant to interact with the user in a second manner, wherein the second manner comprises interacting with the user through a graphical interface, wherein
that the first voice meets a first condition comprises: the first voice comprises one or more of the following: a first-type keyword and a second-type keyword, wherein the first-type keyword comprises one or more of the following types of application names: a video type, a shopping type, and a navigation type; and the second-type keyword comprises one or more of the following verbs: view and display.

17. The electronic device according to any one of claims 14 to 16, wherein
the detection apparatus is further configured to: detect, in a process in which the voice assistant interacts with the user in the second manner, whether the first case exists; and
the processor is further configured to: when the detection apparatus detects the first case, turn off the screen, and enable the voice assistant to interact with the user in the first manner.

18. A voice interaction method, comprising:
detecting, by an electronic device, a first operation of a user when a screen is in a screen-off state, wherein the first operation is used to start a voice assistant; and
in a third case, starting, by the electronic device, the voice assistant when the screen is kept in the screen-off state, and enabling the voice assistant to interact with the user in a first manner, wherein the first manner is to interact with the user only through a voice; and the third case comprises: a camera detects a face and a first gesture.

19. The method according to claim 18, further comprising:
in a fourth case, turning on, by the electronic device, the screen, starting the voice assistant, and enabling the voice assistant to interact with the user in a second manner, wherein the second manner comprises interacting with the user through a graphical interface; and the fourth case comprises: the camera detects the face and does not detect the first gesture.

20. An electronic device, comprising: a screen, an input apparatus, a camera, and at least one processor, wherein
the input apparatus is configured to detect a first operation of a user when the screen is in a screen-off state, wherein the first operation is used to start a voice assistant;
the camera is configured to: when the input apparatus detects the first operation of the user, detect whether a third case exists, wherein the third case comprises: the camera detects a face and a first gesture; and
the processor is configured to: when the camera detects the third case, start the voice assistant when the screen is kept in the screen-off state, and enable the voice assistant to interact with the user in a first manner, wherein the first manner is to interact with the user only through a voice.

21. The electronic device according to claim 20, further comprising:
the camera is further configured to detect whether a fourth case exists, wherein the fourth case comprises: the camera detects the face but does not detect the first gesture; and
the processor is further configured to: when the camera detects the fourth case, turn on the screen, start the voice assistant, and enable the voice assistant to interact with the user in a second manner, wherein the second manner comprises interacting with the user through a graphical interface.

22. A computer storage medium, comprising computer instructions, wherein when the computer instructions are run on an electronic device, the electronic device is enabled to perform the method according to any one of claims 1 to 12 or the method according to claim 18 or 19.

23. A computer program product, wherein when the computer program product runs on an electronic device, the electronic device is enabled to perform the method according to any one of claims 1 to 12 or the method according to claim 18 or 19.
